# FASCICULE DE BREVET EUROPEEN

(11) **EP 3 286 882 B1**
(45) Date de publication et mention de la délivrance du brevet: **25.12.2024**
(21) Numéro de dépôt: 16721200.0
(22) Date de dépôt: 20.04.2016
(51) Int. Cl.: H04L 12/28, H04L 41/0631, H04L 41/084, H04L 43/0817

(54) **PROCÉDÉS DE CONFIGURATION, DE SUPERVISION ET DE COMMANDE D'AU MOINS UNE INSTALLATION DOMOTIQUE D'UN BÂTIMENT**
VERFAHREN ZUR KONFIGURATION, ÜBERWACHUNG UND STEUERUNG VON MINDESTENS EINEM HEIMAUTOMATISIERUNGSSYSTEM EINES GEBÄUDES
METHODS FOR CONFIGURING, MONITORING AND CONTROLLING AT LEAST ONE HOME-AUTOMATION SYSTEM OF A BUILDING

(30) Priorité: 21.04.2015 FR 1553539
(43) Date de publication de la demande: 28.02.2018
(73) Titulaire: Overkiz, 74370 Metz-Tessi (FR)
(72) Inventeur: POGNANT, Sylvain, 74600 Seynod (FR)
(74) Mandataire: Germain Maureau
(86) Numéro de dépôt international: PCT/FR2016/050913
(87) Numéro de publication internationale: WO 2016/170265

(56) Documents cités:
- EP-A1- 1 950 911
- US-A1- 2004 133 704
- US-A1- 2004 215 694
- US-A1- 2012 303 824
- US-A1- 2013 086 066
- MARC-OLIVER PAHL ET AL: "Knowledge-based middleware for future home networks", WIRELESS DAYS (WD), 2009 2ND IFIP, IEEE, PISCATAWAY, NJ, USA, 15 December 2009 (2009-12-15), pages 1 - 6, XP031659489, ISBN: 978-1-4244-5660-4
- MARC-OLIVER PAHL ET AL: "The missing layer - Virtualizing smart spaces", 2013 IEEE INTERNATIONAL CONFERENCE ON PERVASIVE COMPUTING AND COMMUNICATIONS WORKSHOPS (PERCOM WORKSHOPS), 1 March 2013 (2013-03-01), pages 139 - 144, XP055249109, ISBN: 978-1-4673-5076-1, DOI: 10.1109/PerComW.2013.6529471

## Description

La présente invention concerne un procédé de configuration, de commande et/ou de supervision d'une installation domotique.

Il est connu de procéder à la commande et/ou à la supervision d'une installation domotique par l'intermédiaire d'une multiplicité de protocoles de communication.

Ainsi, la liste non-exhaustive des protocoles à prendre en compte pour la commande et/ou la supervision d'une installation comprend : Z-Wave, EnOcean, IO Homecontrol, Somfy RTS, KNX, MODBUS, Wavenis, Philips HUE ainsi que d'autres protocoles propriétaires.

Les protocoles utilisés de façon courante présentent des différences importantes. En particulier, les différents protocoles peuvent prévoir des mécanismes de partition logique des dispositifs qui sont différents. Ainsi, un dispositif physique avec de multiples fonctions peut être modélisé comme un dispositif logique unique ou une pluralité de dispositifs logiques.

Un dispositif peut se trouver, selon son type, dans différents états. A titre d'exemple, un état peut correspondre à la marche ou à l'arrêt pour un interrupteur, ou à un degré ou pourcentage d'ouverture pour un volet. La description des états des dispositifs peut être générique ou spécialisée, en fonction du protocole local. Les identifiants des variables d'état peuvent être numériques ou alphanumériques. Les valeurs des variables d'états peuvent utiliser des formats ou des échelles personnalisées ou propriétaires.

Les dispositifs sont aptes à interpréter et exécuter des commandes. La description des commandes de dispositif peut être générique ou spécialisée, les identifiants des commandes pouvant être numériques ou alpha numériques. Les commandes peuvent présenter des paramètres, dont les valeurs peuvent utiliser des formats ou des échelles personnalisées ou propriétaires.

Les protocoles de communication locaux utilisés peuvent être monodirectionnels, bidirectionnels sous forme d'échange requête/réponse ou de double échange monodirectionnel utilisant une approche évènementielle. Ces protocoles utilisent un format propriétaire, usuellement binaire.

Ainsi, le manque de normalisation dans les protocoles de communications locaux de dispositifs rend difficile la commande à distance et la supervision d'installations domotiques hétérogènes.

Le document MARC-OLIVIER PAHL ET AL: « Knowledge-based ùmiddleware for future home network, WIRELESS DAYS (WD), 2009 2ND IFIP, IEEE, PISCATAWAY, NJ, USA, 15 décembre 2009, ISBN: 978-1-4244-5660-4 décrit une abstraction pour l'orchestration logicielle des espaces intelligents. Le but étant de faciliter la programmation des logiciels d'orchestration sans en limiter les fonctionnalités. Plus spécifiquement, le document MARC-OLIVIER PAHL ET AL décrit un « Knowledge Agent (KA) » utilisable en tant que « node-exchanging point » ou « proxy for the slow-link devices ».

La présente invention a pour but de résoudre tout ou partie des inconvénients mentionnés ci-dessus.

Les modes de réalisation concernant un procédé de supervision et un procédé de commande, ne relèvent pas de l'invention et ne sont présents qu'à titre illustratif.

A cet effet, il est décrit un procédé de supervision d'au moins une installation domotique d'un bâtiment, l'installation domotique comprenant une pluralité de dispositifs domotiques, chaque dispositif domotique étant représenté par au moins une instance de modèle de dispositif générique et au moins une instance de modèle de dispositif de bas niveau ; le procédé étant exécuté par une unité de gestion connectée à l'au moins une installation domotique et comprenant les étapes suivantes :
i. Réception d'un message de notification d'état en provenance d'une unité centrale de commande d'une installation domotique contenant une indication concernant au moins une variable d'état de bas-niveau d'un dispositif domotique ;
ii. Détermination de l'au moins une instance de modèle de dispositif de bas-niveau représentant le dispositif domotique ;
iii. Détermination d'une conversion d'état convertissant l'au moins une variable d'état de bas niveau en au moins une variable d'état générique sur la base d'au moins une règle de conversion d'état sélectionnée en fonction de l'au moins une variable d'état de bas-niveau ou de son type.
iv. Détermination de l'au moins une instance de modèle de dispositif générique pour l'au moins une instance de modèle de dispositif de bas-niveau déterminée à l'étape ii ;
v. Mise à jour de l'au moins une variable d'état générique de l'au moins une instance de modèle de dispositif générique déterminée à l'étape iv en fonction de la conversion d'état déterminée à l'étape iii.

Il est à noter que l'étape iii peut être réalisée avant l'étape ii ou après l'étape iv suivant les modes de réalisation considérés.

Grâce aux dispositions selon l'invention, il est possible de procéder à une supervision, notamment à une supervision à distance, de l'installation domotique de façon uniforme quelque soit le protocole de communication ou de commande local utilisé pour superviser les dispositifs domotiques.

Ainsi, Le modèle générique de dispositif est un modèle indépendant du protocole permettant de décrire les dispositifs du bâtiment de façon fonctionnelle.

Il est à noter que l'on entend par dispositif domotique un équipement domotique et/ou un capteur, ou encore une partie d'équipement domotique ou une partie de capteur correspondant à un sous-ensemble fonctionnel.

Par ailleurs, on entend par message un élément d'information notifié ou réceptionné sous la forme d'un appel synchrone ou asynchrone à l'unité de gestion, pouvant également correspondre à un appel de fonction local ou distant.

Selon un aspect de l'invention, chaque instance de modèle de dispositif générique comprend une indication d'appartenance à une classe ou un type de modèle de dispositif générique.

Selon un aspect de l'invention, chaque instance de modèle de dispositif de bas- niveau comprend une indication d'appartenance à une classe ou un type de modèle de dispositif de bas-niveau.

Selon un aspect de l'invention, chaque instance de modèle de dispositif de bas- niveau comprend une indication d'un type de protocole de communication local reconnu par le dispositif domotique.

Le traitement des informations stockées dans ce modèle de bas niveau pour un dispositif donné implique une connaissance du protocole particulier et du format de données pour ce dispositif. Selon un aspect de l'invention, ce modèle peut présenter un format de structure commun pour les différents types de dispositifs de bas-niveau, mais les types des attributs, des variables d'états et des commandes définies dans ce modèle ne sont pas génériques.

La conversion entre le modèle générique et le modèle de bas-niveau est opérée sur la base d'un ensemble de règles de conversion de modèle prédéfinies, qui sont notamment enregistrées sur l'unité de gestion et permettent de fournir une abstraction des dispositifs pour les applications ou les utilisateurs.

Selon un aspect de l'invention, l'unité de gestion est un serveur connecté à distance à l'au moins une installation domotique, par l'intermédiaire d'un réseau étendu.

Selon un autre aspect de l'invention, l'unité de gestion est une unité centrale destinée à être reliée à une ou plusieurs unités centrales de commande sur des réseaux privés ou locaux distincts, ou encore sur le même réseau local.

Selon un aspect de l'invention, la sélection d'une règle de conversion d'état en fonction de la variable d'état de bas niveau est réalisée sur la base du type de la variable d'état et du type de dispositif de bas-niveau.

Selon un aspect de l'invention, les règles de conversion d'état sont stockées en association avec les données suivantes :
- un identifiant ou un nom de variable générique ;
- un type de dispositif générique ;
- un identifiant ou un nom de variable de bas niveau ;

Selon un aspect de l'invention, une règle de conversion d'état définit la correspondance entre un identifiant d'une variable d'état de bas niveau et un identifiant d'une variable d'état générique, ainsi que une règle de conversion entre la valeur d'une variable d'état de bas-niveau et une valeur d'une variable d'état générique.

Selon un aspect de l'invention, le procédé comprend une étape de mise à jour de la valeur de la variable d'état de bas-niveau et de stockage de cette valeur.

Selon un aspect de l'invention, les instances de modèle de dispositif générique sont seulement partiellement mémorisées de façon persistante. Les valeurs des variables d'états générique sont recalculées à partir des données des instances de modèles de bas-niveau sur la base des règles de conversion d'état.

Selon un aspect de l'invention, le procédé comprend en outre une étape d'émission d'un message de communication d'au moins une valeur de variable d'état générique GS mise à jour à destination d'un terminal utilisateur ou d'une application exécutée sur l'unité de gestion ou sur une autre unité de gestion connectée.

Cette communication peut être réalisée de façon sollicitée ou non par l'utilisateur ou l'application. Selon un aspect de l'invention, un système de notification et d'abonnement peut être mis en place.

Il est à noter que par autre unité de gestion connectée, il est entendu une autre unité de gestion présente sur le même réseau local ou sur un autre réseau local avec une connection à l'unité de gestion exécutant le procédé de supervision.

Selon un aspect de l'invention, l'étape de détermination de l'instance de modèle de dispositif de bas-niveau comprend une détermination d'une clef d'indexation sur la base d'éléments d'identification contenus dans le message ou déterminables à réception du message dont la combinaison permet une identification unique d'un dispositif domotique.

Selon un aspect de l'invention, les différents éléments d'identification, pris individuellement, ne sont pas nécessairement uniques pour chaque dispositif ; mais la combinaison de deux ou plusieurs éléments d'information doit l'être. L'identifiant de l'unité centrale de commande à laquelle le dispositif domotique est rattaché ou l'adresse du dispositif domotique, ou éventuellement celle de son parent dans un système d'adressage hiérarchique dans le réseau local géré par l'unité centrale de commande sont des exemples d'éléments d'identification.

Il est également décrit un procédé de commande d'au moins une installation domotique d'un bâtiment, l'installation domotique comprenant une pluralité de dispositifs domotiques, chaque dispositif domotique étant représenté par au moins une instance de modèle de dispositif générique et au moins une instance de modèle de dispositif de bas niveau ; le procédé est exécuté par une unité de gestion connectée à l'au moins une installation domotique et comprend les étapes suivantes :
i. Réception d'un message de commande en provenance d'un utilisateur ou d'une application sur l'unité centrale de gestion ou sur une autre unité de gestion connectée, le message de commande correspondant à une commande générique relative à un dispositif domotique ;
ii. Détermination de l'au moins une instance de modèle de dispositif générique représentant le dispositif domotique ;
iii. Détermination de l'au moins une instance de modèle de dispositif de bas-niveau pour l'au moins une instance de modèle de dispositif générique déterminée à l'étape ii ;
iv. Détermination d'une conversion de commande convertissant l'au moins une commande générique en au moins une commande de bas-niveau sur la base d'au moins une règle de conversion de commande sélectionnée en fonction de l'au moins une commande générique ou de son nom.
v. Envoi d'au moins un message de commande de bas-niveau comprenant l'au moins une commande de bas niveau correspondant à la conversion de commande déterminée à l'étape iv à destination d'une unité centrale de commande de l'installation domotique de façon à déclencher l'exécution d'au moins une commande réelle correspondant à l'au moins une commande de bas-niveau sur le dispositif domotique correspondant à l'instance de bas niveau déterminée à l'étape iii.

Il est à noter que l'étape iv peut être réalisée avant ou après l'étape iii suivant les modes de réalisation considérés. Dans le cas ou l'étape iv est réalisée préalablement à l'étape iii, une éventuelle information relative au protocole local peut être utilisée de façon additionnelle à l'information concernant la commande générique. Cette information concernant le protocole local peut être obtenue d'un identifiant de l'instance de modèle de dispositif générique.

Grâce aux dispositions selon l'invention, il est possible de procéder à une commande, notamment à une commande à distance, de l'installation domotique de façon uniforme quelque soit le protocole de communication ou de commande local utilisé pour commander les dispositifs domotiques. Il est ainsi possible, par exemple, de fournir une interface de programmation commune pour le pilotage de tous les dispositifs domotique réels ayant un même modèle générique, quelque soit le protocole local et le dispositif de bas-niveau sous-jacent.

Par autre unité de gestion connectée, on entend une autre unité de gestion présente sur le même réseau local ou sur un autre réseau avec une connection à l'unité de gestion exécutant le procédé.

Selon un aspect de l'invention, la règle de conversion de commande est sélectionnée en fonction de l'au moins une commande générique ou de son nom, et d'un type de dispositif de bas-niveau correspondant l'au moins une instance de modèle de dispositif de bas-niveau déterminée à l'étape iii.

Selon un aspect de l'invention, les règles de conversion de commande sont stockées en association avec les données suivantes :
- un type de dispositif de bas-niveau;
- un nom ou identifiant de commande générique.

Selon un aspect de l'invention, la sélection de la règle de conversion de commande est réalisée en utilisant le type de protocole de communication local et le nom ou identifiant de la commande générique.

Selon un aspect de l'invention, la conversion de commande d'au moins une commande générique applicable à l'au moins une instance du modèle générique en au moins une commande de bas niveau correspond à une combinaison d'une pluralité de commandes de bas niveau de et l'étape d'envoi correspond à l'envoi d'une pluralité de commandes à destination de l'unité centrale de commande de façon à déclencher l'exécution d'une combinaison d'une pluralité de commandes réelles sur le dispositif.

Selon un aspect de l'invention, le procédé comprend en outre les étapes suivantes :
- stockage en mémoire de la correspondance entre ladite commande générique et la pluralité de commandes de bas niveau ; et
- détermination d'un résultat de la commande générique en fonction des résultats des commandes bas-niveau correspondantes.

Grâce à ces dispositions, il est possible de déterminer un résultat de commande globale sur la commande générique originale en agrégeant des résultats de commande reçus pour chaque commande de bas-niveau exécutée.

Selon un aspect de l'invention, la commande générique est considérée comme effectuée si toutes les commandes de bas-niveau ont été réalisées avec succès, et non-effectuée si une ou plusieurs commande de bas-niveau ont échoué.

Selon un aspect de l'invention, les codes d'erreurs spécifiques du protocole sont traduits en des types d'erreur génériques.

La présente invention concerne un procédé de configuration d'au moins une installation domotique d'un bâtiment, l'installation domotique comprenant une pluralité de dispositifs domotiques, chaque dispositif domotique étant représenté par au moins une instance de modèle de dispositif générique et au moins une instance de modèle de dispositif de bas niveau ; le procédé est exécuté par une unité de gestion connectée à l'au moins une installation domotique et comprend les étapes suivantes :
i. réception d'un message de configuration émis à partir d'une unité centrale de commande d'une installation domotique ou d'un terminal utilisateur, le message contenant une indication d'une mise en service , d'une configuration ou d'une reconfiguration d'un dispositif domotique.
ii. détermination d'au moins une classe ou type de modèle de dispositif de bas-niveau correspondant au dispositif domotique ;
iii. création d'au moins une instance de modèle de dispositif de bas-niveau en fonction de la classe ou type de dispositif de bas-niveau définie à l'étape ii et correspondant au dispositif domotique.
iv. détermination d'une conversion de modèle convertissant un type ou classe de dispositif de bas niveau en au moins une classe ou type de modèle de dispositif générique sur la base d'une règle de conversion de modèle sélectionnée en fonction de l'instance de modèle de dispositif bas-niveau déterminée à l'étape iii ou de son type.
v. création d'au moins une instance de modèle de dispositif générique pour l'au moins une instance de modèle de dispositif de bas-niveau sur la base de l'au moins un type ou classe correspondant à la conversion de modèle déterminé à l'étape iv.

Selon un aspect de l'invention, on procède à un enregistrement des instances de modèles de dispositifs génériques de façon associée avec l'instance de modèle de dispositif de bas-niveau.

Selon un aspect de l'invention, les règles de conversion de modèle sont stockées sous forme d'une association entre :
- un type de dispositif de bas-niveau ;
- au moins un type ou classe de dispositif générique correspondant GDT.

Selon un aspect de l'invention, le procédé comprend en outre les étapes suivantes :
- Emission d'un message de communication de la configuration d'au moins un dispositif à destination d'un terminal utilisateur ou d'une application exécutée sur l'unité de gestion ou sur une autre unité de gestion connectée.

Cette communication peut être réalisée de façon sollicitée ou non par l'utilisateur ou l'application. Selon un aspect de l'invention, un système de notification et d'abonnement peut être mis en place.

Par autre unité de gestion connectée, on entend une autre unité de gestion présente sur le même réseau local ou sur un autre réseau avec une connection à l'unité de gestion exécutant le procédé.

Selon un aspect de l'invention concernant le procédé de configuration, le procédé de commande et le procédé de supervision précédemment décrits, la détermination d'au moins une instance de modèle de dispositif générique pour l'au moins instance de modèle de dispositif de bas-niveau correspond à une détermination d'un groupe d'instances de modèles de dispositif générique.

Grâce à ces dispositions, il est possible de représenter de façon générique un dispositif réel complexe offrant des fonctions multiples. Dans un tel cas, les instances de modèles de dispositif génériques sont dispositifs relatifs à la même instance de modèle de dispositif bas-niveau sont appelés sous-systèmes.

Cela est notamment le cas en raison du fait que la couverture fonctionnelle d'un modèle de dispositif de bas niveau peut être différente suivant les protocoles considérés. Ainsi, un modèle de dispositif de bas niveau peut soit couvrir une fonction simple, soit de multiples fonctions d'un système complexe. A titre d'exemple, un équipement de chauffage peut couvrir fonctionnellement des commandes de marche/arrêt/réglage du chauffage qui correspondent à une première instance modèle de dispositif générique de type « système de chauffage ». Cet équipement de chauffage peut également comprendre un ou plusieurs capteurs de température, éventuellement localisés à des positions distinctes qui peuvent correspondre à des instances d'un autre modèle de dispositif générique relatif à un type ou une classe « capteur ».

Il est ainsi possible de définir un scénario de commande comprenant une commande destinée à un premier dispositif réel en utilisant un dispositif correspondant à un second dispositif réel, comme par exemple un capteur appartenant au second dispositif réel.

Cette disposition permet d'utiliser ces parties de dispositif ou sous-systèmes de façon séparée logiquement et fonctionnellement.

Selon un aspect de l'invention, chaque instance de modèle de dispositif générique comprend un identifiant unique de dispositif générique.

Grâce à ces dispositions, la description réalisée est indépendante du protocole de communication local ou des détails d'implémentation du dispositif réel et de l'instance de modèle de dispositif de bas-niveau sous-jacent.

Selon un aspect de l'invention, le modèle de dispositif générique définit un ensemble de commandes ou de fonctions associées audit modèle.

Selon un aspect de l'invention, le modèle de dispositif générique définit un ensemble d'états ou de variables d'états associés audit modèle.

Selon un aspect de l'invention, le modèle de dispositif générique définit un ensemble d'attributs associés audit modèle.

Selon un aspect de l'invention, les noms des états ou des variables d'états attachés à un modèle de dispositif générique sont explicites.

Selon un aspect de l'invention, les valeurs de variables d'états attachés à un modèle de dispositif générique sont normalisées.

Selon un aspect de l'invention, les noms des commandes attachés à un modèle de dispositif générique sont explicites.

Selon un aspect de l'invention, les paramètres de commandes attachés à un modèle de dispositif générique sont normalisés.

Selon un aspect de l'invention, l'identifiant unique de l'instance de modèle générique peut être constitué en particulier par un identifiant utilisant notamment une notation d'adresse indépendante du protocole, par exemple selon un format de type URL.

Selon un aspect de l'invention, chaque instance de modèle de dispositif de bas-niveau comprend en outre un identifiant de dispositif de bas-niveau unique dans le réseau local associé à une unité centrale de commande d'une installation domotique

Selon un aspect de l'invention, le modèle de dispositif de bas niveau définit un ensemble de commandes ou de fonctions associées audit modèle.

Selon un aspect de l'invention, le modèle de dispositif de bas niveau définit un ensemble d'états ou de variables d'états associés audit modèle.

Selon un aspect de l'invention, le modèle de dispositif de bas niveau définit un ensemble d'attributs associés audit modèle.

Selon un aspect de l'invention, chaque instance de modèle de dispositif de bas-niveau comprend un type ou une classe de dispositif ;

Selon un aspect de l'invention, chaque instance de modèle de dispositif de bas-niveau comprend un type de protocole utilisé dans le réseau local

Selon un aspect de l'invention, une instance de modèle de dispositif de bas-niveau RD peut être associé à une ou plusieurs commandes de bas niveau avec :
- un nom ou identifiant de commande ; et
- un ou plusieurs paramètres de bas-niveau.

Selon un aspect de l'invention, la description des commandes n'est pas stockée dans les instances, mais peut être déterminée en fonction du type de dispositif de bas-niveau et/ou du type de protocole utilisé dans le réseau local. En particulier, une commande de bas niveau peut être déterminée en fonction d'une règle de conversion de commande.

Selon un aspect de l'invention, un méta-modèle de référence est maintenu pour stocker des informations communes sur les modèles de dispositif de bas niveau, leurs variables d'états et les commandes attachées, à savoir :
- Les types de dispositifs de bas niveau supportés et leurs noms ;
- Les variables d'états de bas niveau supportés avec leurs identifiants RSID et les types de données pour les valeurs ;
- Les profils décrivant la relation entre les types de modèles de dispositif de bas niveau et les valeurs de variables d'état autorisées.

Selon un aspect de l'invention, ce méta-modèle de référence est partagé dans l'architecture pour permettre des vérifications d'intégrité et une gestion appropriée des valeurs de variables d'états des instances de modèles de dispositifs de bas niveau lorsque la connaissance du type de données est nécessaire, sans besoin de stocker cette information pour chaque instance de modèle de dispositif de bas-niveau.

Selon un aspect de l'invention, l'identifiant unique de dispositif générique comprend une adresse logique de dispositif qui établit une correspondance entre l'au moins une instance de modèle de dispositif générique et une instance de modèle de dispositif de bas-niveau.

Selon un aspect de l'invention, l'adresse logique de dispositif comprend :
- un type protocole de communication du dispositif;
- un chemin de communication vers le dispositif.

Selon un aspect de l'invention, le chemin de communication vers le dispositif inclut les éventuelles unités centrales de commande intermédiaires et les adresses de terminaison à traverser, organisées de préférence selon une topologie hiérarchique.

Selon un aspect de l'invention, l'adresse logique de dispositif comprend en outre :
- Un identifiant de sous-système si l'instance de modèle de dispositif générique appartient à un groupe d'instances de modèles de dispositifs génériques associés à la même instance de modèle de dispositif de bas-niveau sous-jacente.

La présente invention concerne également un produit programme d'ordinateur comprenant des instructions de code agencées pour mettre en oeuvre les étapes d'un procédé tel que détaillé précédemment, lorsque ledit programme est exécuté par un processeur.

Le mode de réalisation suivant ne relève pas de l'invention et n'est présent qu'à titre illustratif tel qu'un système comprenant une unité de gestion agencée pour exécuter l'un des procédés détaillés ci-dessus, de façon connectée à une unité centrale de commande d'une installation domotique.

Les dispositions décrites ci-dessus permettent de disposer au niveau de l'unité de gestion d'informations de bas niveau sur les dispositifs, et en même temps de données de haut-niveau. Ainsi, un effet d'abstraction est obtenu sans se priver des informations techniques des protocoles domotiques sous-jacents. Ceci permet de :
- conserver un modèle générique plus succinct présenté aux services et aux interfaces.
- conserver la connaissance des spécificités de bas-niveau de chaque dispositif.

Ces dispositions peuvent par exemple être mises en oeuvre pour :
- La phase d'appairage des produits: en effet les procédures peuvent être spécifiques en fonction du protocole, du constructeur ou même de la version du produit.
- La réalisation de services de diagnostic qui nécessite l'accès aux valeurs techniques et à des fonctionnalités propriétaires en fonction du modèle de produit.
- La possibilité de reconfigurer un produit grâce aux informations stockées dans cette couche et en particulier permettre le remplacement d'un produit défectueux sans repasser par l'ensemble des phases d'appairage.

Les différents aspects définis ci-dessus non incompatibles peuvent être combinés.

L'invention sera mieux comprise à l'aide de la description détaillée qui est exposée ci-dessous en regard du dessin annexé dans lequel :
La figure 1 est une vue schématique d'un bâtiment et d'une installation domotique conforme à un mode de réalisation de l'invention ;
La figure 2 est un schéma présentant une architecture d'un système comprenant l'installation domotique illustrée à la figure 1 ainsi qu'un serveur destiné à être connecté à un terminal utilisateur ;
La figure 3 est un schéma représentant un système d'abstraction des dispositifs domotiques.
La figure 4 est un schéma représentant un modèle de dispositif de bas niveau.
La figure 5 est un schéma représentant un modèle de dispositif générique
La figure 6 est un schéma illustrant un mode de mise en oeuvre d'un procédé de configuration d'une installation domotique selon l'invention.
La figure 7 est un schéma illustrant un mode de mise en oeuvre d'un procédé de supervision d'une installation domotique non revendiqué.
La figure 8 est un schéma illustrant un mode de mise en oeuvre d'un procédé de commande d'une installation domotique non revendiqué.

Dans la description détaillée qui va suivre des figures définies ci-dessus, les mêmes éléments ou les éléments remplissant des fonctions identiques pourront conserver les mêmes références de manière à simplifier la compréhension de l'invention.

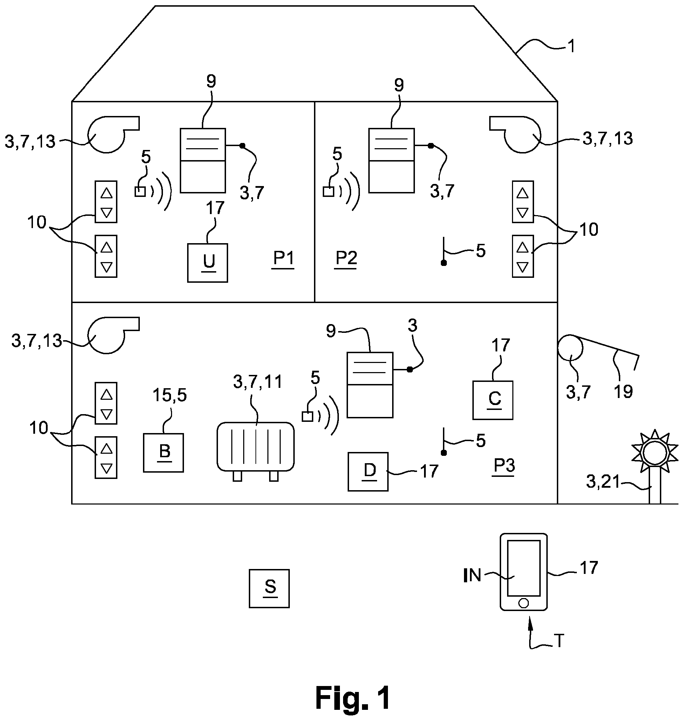

Comme illustré à la figure 1, un bâtiment 1 comprend à titre d'exemple trois pièces P1, P2, P3. Le bâtiment 1 comprend également des équipements domotiques 3 et des capteurs 5.

Un équipement domotique 3 peut être un actionneur agencé pour déplacer ou régler un élément du bâtiment 1, par exemple un actionneur 7 pour déplacer un volet roulant 9 ou un store de terrasse 19, ou un système de régulation 10 pour un chauffage 11 ou un système aéraulique 13. Un équipement domotique 3 peut également être un éclairage, par exemple un éclairage extérieur de terrasse 21 ou un système de commande d'éclairage, ou encore un système d'alarme.

L'installation domotique 17 peut également comprendre un point de commande 15 d'un actionneur 7, comme un boîtier de commande B sans fil pour le volet roulant 9.

L'installation domotique 17 peut comprendre un ou plusieurs capteurs 5, de façon intégrée à un actionneur 7, à un point de commande 15 ou encore au boîtier de commande B, ou de façon indépendante à ces éléments. Un capteur 5 peut, notamment, être agencé pour mesurer une grandeur physique, par exemple un capteur de température, un capteur d'ensoleillement ou un capteur d'humidité. Des capteurs 5 de position d'équipements domotiques 3 du bâtiment 1, comme, par exemple, des capteurs de l'état d'ouverture d'un volet roulant 9 ou des capteurs de position d'un ouvrant tel une fenêtre, motorisée ou non, peuvent également être prévus. L'installation domotique peut également comprendre un ou plusieurs capteurs de présence.

Un équipement domotique 3 et un capteur 5 sont ainsi à considérer comme des unités ayant à disposition des informations sur des états réels constatés d'éléments du bâtiment 1 et étant aptes à partager ces informations avec d'autres éléments de l'installation domotique 17.

Les équipements domotiques 3 et les capteurs 5 peuvent ainsi avoir accès à toute grandeur physique mesurable, comme la température de chaque pièce P1, P2, P3 ou un état d'un élément du bâtiment 1, comme l'état d'ouverture d'un volet roulant 9, le statut d'une alarme, etc.

L'installation domotique 17 comprend une unité centrale de commande U agencée pour commander et/ou contrôler l'ensemble ou une partie des équipements domotiques 3 à distance, notamment en utilisant un protocole de communication sans fil, par exemple un protocole de communication radio. L'unité centrale de commande est agencée pour regrouper l'ensemble des données en provenance des équipements domotiques 3 et pour traiter ces données.

Les dispositifs appartiennent à un réseau local au sein de l'installation domotique et communiquent selon un protocole de communication local. Ils ont une adresse locale dans ce réseau. Les dispositifs logiques peuvent être modélisés comme des noeuds ou points d'extrémité dans le réseau local.

Le système d'adressage local peut être hiérarchique ou à plat, le format d'adresse pouvant être numérique ou alphanumérique.

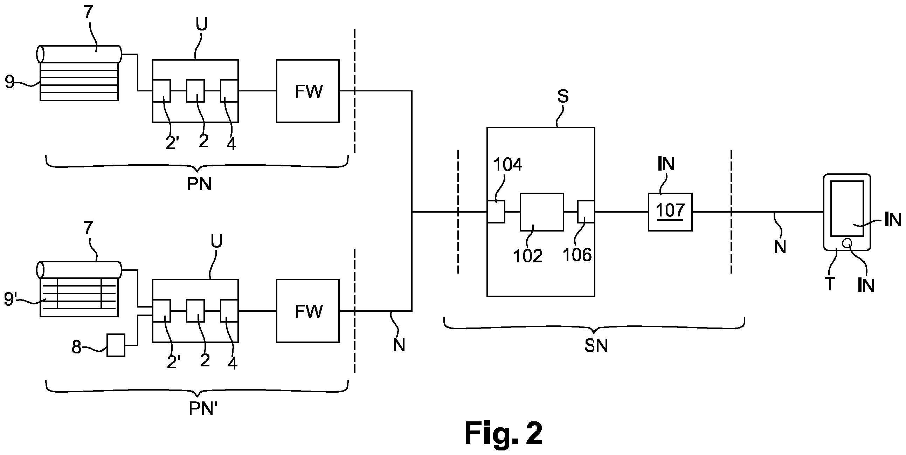

Comme cela est représenté sur la figure 2, l'unité centrale de commande U est agencée pour communiquer avec un serveur Sv.

L'unité centrale de commande U est disposée sur un réseau privé PN, PN', dont l'accès est en général protégé par un pare-feu FW. Le serveur Sv est également disposé sur un réseau privé SN. Le réseau privé PN est relié à un réseau étendu N, par exemple Internet.

En particulier, l'unité centrale de commande U de l'installation domotique 17 comprend une unité de traitement 2 agencée pour contenir et exécuter un premier programme d'ordinateur. La figure 2 représente deux unités centrales de commande U disposées sur deux réseaux privés correspondant à différentes installations domotiques. Bien entendu, le serveur Sv est agencé pour communiquer avec un ensemble de telles unités centrales de commande U. Nous décrirons par la suite une de ces unités.

A titre d'exemple, l'unité de traitement 2 comprend un processeur, une mémoire flash de stockage ainsi d'un mémoire vive, et d'une puce Ethernet.

L'unité centrale de commande U comprend, en outre, au moins un module de communication 2' destinée au contrôle et/ou à la commande d'équipements domotiques 3 et/ou de capteurs 5, les équipements domotiques 3 pouvant être des actionneurs 7, des éclairages 21 ou un système d'alarme.

A titre d'exemple, comme cela est représenté sur la figure 2, le module de communication 2' permet le contrôle et la commande d'au moins un actionneur 7, d'un élément mobile du bâtiment 1, comme par exemple un volet roulant 9, ou d'un brise soleil orientable 9' ou d'autres actionneurs 7 ou d'éclairages 21, comme cela est précédemment décrit en référence à la figure 1.

A titre d'exemple, le module de communication 2' peut être agencé pour mettre en oeuvre par exemple un ou plusieurs des protocoles Z-Wave, EnOcean, IO Homecontrol, Somfy RTS, KNX, MODBUS, Wavenis, Philips HUE.

La réception d'informations d'un capteur 5 fournissant des informations de présence d'un utilisateur ou des valeurs des paramètres environnants, comme la température, l'humidité et la luminosité, est également prévue. De la même façon, l'unité centrale U peut permettre le contrôle et/ou la commande d'un système d'alarme.

Chaque unité centrale de commande U comprend, en outre, un module de communication 4 avec le serveur Sv. Le serveur Sv permet la commande et/ou le contrôle à distance et comprend une ou plusieurs unités de traitement 102 agencée pour contenir et exécuter un deuxième programme d'ordinateur.

Le serveur Sv comprend, en outre, au moins une interface de communication 104 destinée à la communication avec l'unité centrale U.

Le serveur Sv peut comprendre également une interface de communication 106 destinée à la communication avec une interface de commande et/ou de contrôle IN permettant à un utilisateur de contrôler à distance l'installation domotique.

Il est à noter que le terme serveur est une désignation logique qui peut recouvrir l'utilisation de plusieurs serveurs physiques pour répartir la charge de traitement informatique à réaliser.

L'interface de commande et/ou de contrôle IN comprend, par exemple, un serveur web 107 et un terminal de communication mobile T communiquant par le réseau étendu N. Le terminal de communication mobile T peut être, par exemple, un téléphone intelligent ou une tablette.

L'interface de commande et/ou de contrôle IN comprend un processeur qui peut être disposé au niveau du serveur web 107 et/ou du terminal de communication mobile T.

Le processeur de l'interface de commande et/ou de contrôle IN est agencé pour utiliser un troisième programme d'ordinateur. Ce troisième programme d'ordinateur est quant à lui agencé pour exécuter une application téléchargeable.

Le terminal de communication mobile T comprend un dispositif d'entrée de données et un dispositif d'affichage, par exemple sous forme d'une partie de commande tactile d'un écran du terminal T et sous forme d'un ou de plusieurs boutons du terminal T.

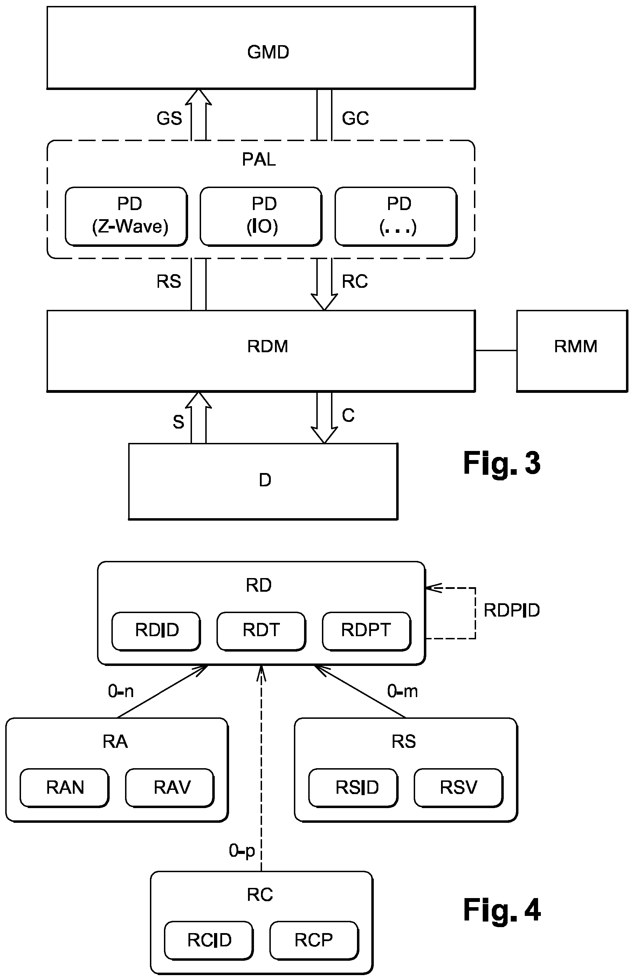

Selon un aspect de l'invention, et comme cela est représenté sur la figure 3, l'unité de traitement du serveur 102 est agencée pour mettre en oeuvre un système d'abstraction destinée à la commande et/ou au contrôle des dispositifs, équipements domotiques ou capteurs. Par la suite nous utiliserons la désignation de dispositif D indifféremment pour désigner des capteurs ou des équipements domotiques, ou encore des parties d'équipements domotiques 3 ou de capteurs 5.

Comme cela est représenté sur la figure 3, le système d'abstraction proposé met en oeuvre :
- Une pluralité de modèles de dispositifs de bas-niveau RDM destinés au stockage d'informations dans un format spécifique d'un protocole sur un dispositif réel D donné, un seul modèle étant représenté sur la figure 3 ;
- Une pluralité de modèles de dispositifs génériques de haut-niveau GDM permettant la description des dispositifs réels D, de leurs états S et des commandes C d'une façon indépendante du protocole, un seul modèle étant représenté sur la figure 3 ; ; et
- Une pluralité de pilotes de protocoles PD qui mettent en oeuvre les conversions nécessaires pour passer d'un modèle à l'autre et forment une couche d'abstraction de protocole PAL.

Comme cela est représenté sur la figure 4, le modèle de dispositif de bas niveau permet le stockage d'information sur les dispositifs et leur état, dans un format proche de leur format natif de protocole de communication.

Le traitement des informations stockées dans ce modèle pour un dispositif donné implique une connaissance du protocole particulier et du format de données pour ce dispositif. Selon un aspect de l'invention, ce modèle peut présenter un format de structure commun pour les différents types de dispositifs de bas-niveau, mais les types des attributs, des variables d'états et des commandes définies dans ce modèle ne sont pas génériques.

Chaque instance RD d'un modèle de bas niveau RDM correspond à un noeud adressable dans le réseau local auquel il appartient et dans lequel il communique selon le protocole cible. Le noeud agit comme une terminaison. Un tel noeud peut correspondre à un dispositif physique, une partie d'un dispositif (un sous-ensemble fonctionnel).

Une instance RD d'un modèle de bas-niveau comprend :
- Un identifiant de l'instance de modèle de bas niveau RDID, qui peut comprendre en particulier une adresse de terminaison dans le réseau local.
- Un type ou une classe de dispositif RDT ;
- Un type de protocole RDPT utilisé dans le réseau local.

L'identifiant RDID ou adresse est utilisée comme une adresse de communication ou comme un chemin de routage. Cette adresse est unique, au moins dans le réseau local auquel appartient le dispositif D.

L'information de type RDT peut être obtenue directement du dispositif domotique D, mais il est peut être nécessaire d'utiliser des tables de référence externes ou même une information fournie par un utilisateur pour connaître le type de dispositif exact. Dans le cas où cette information est demandée à l'utilisateur, cette information RDT peut être demandée une unique fois à l'utilisateur lors de la phase de configuration/appairage du produit et ensuite stockée dans l'instance RD, en particulier dans la base IDB qui sera décrite ultérieurement.

Par ailleurs, chaque instance de modèle de bas niveau RD peut présenter :
- Un ou plusieurs attributs RA ;
- Une ou plusieurs variables d'états RS ;

Un attribut RA est notamment défini par un nom d'attribut RAN et par une valeur RAV. Les attributs RA représentent par exemple des informations additionnelles de type et/ou de configuration obtenues par exemple pendant la phase d'appairage. Les attributs sont notamment des informations invariables après l'appairage.

Une variable d'état RS est notamment définie par un identifiant unique RSID dans la portée du modèle de dispositif de bas-niveau RDM considéré, et par une valeur RSV. Les instances de modèles de dispositifs de bas niveau RD présentant des variables d'états RS peuvent autoriser des requêtes sur leur état et/ou envoyer des notifications lorsque la valeur de la variable d'état RSV change.

Une instance de modèle de dispositif de bas niveau RD peut également comporter une adresse parente RDPID. L'adresse parente RDPID permet aux instances de modèles de dispositif de bas niveau RD du même protocole d'être organisés en un arbre de noeuds hiérarchique. Cela est utile pour les protocoles dans lequel la topologie hiérarchique est nécessaire au routage des informations vers les noeuds, ou dans le cas où un dispositif ne peut pas exister sans parent.

Ainsi, l'ensemble des instances RD d'une installation 17 peut former une liste ou un arbre de noeuds, dans le cas d'une topologie hiérarchique, suivant les protocoles utilisés.

Comme cela est indiqué sur la figure 3, un méta-modèle de référence RMM est maintenu pour stocker des informations communes sur les modèles de dispositif de bas niveau RDM, leurs variables d'états RS et les commandes attachées RC, à savoir :
- Les types de dispositifs de bas niveau RT supportés et leurs noms ;
- Les variables d'états RS de bas niveau supportées avec leurs identifiants RSID et les types de données pour les valeurs RSV ;
- Les profils décrivant la relation entre les types de modèles de dispositif de bas niveau RDM et les valeurs de variables d'état RS autorisées.

Ce méta-modèle de référence RMM est partagé dans l'architecture pour permettre des vérifications d'intégrité et une gestion appropriée des valeurs de variables d'états RSV des instances de modèles de dispositifs de bas niveau RD lorsque la connaissance du type de données est nécessaire, sans besoin de stocker cette information pour chaque instance de modèle de dispositif de bas-niveau RD.

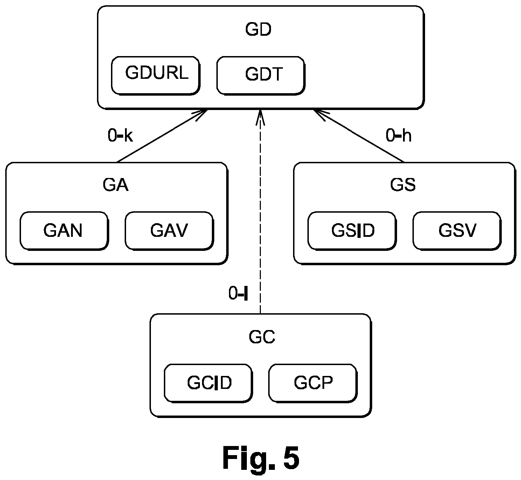

Comme cela est représenté sur la figure 5, le modèle de dispositif générique GDM est un modèle indépendant du protocole permettant de décrire les dispositifs du bâtiment de façon fonctionnelle.

En particulier, une instance de modèle de dispositif générique GD comprend :
- Un identifiant unique de l'instance de modèle générique GDURL, pouvant être constitué en particulier par un identifiant utilisant notamment une notation d'adresse indépendante du protocole, par exemple selon un format de type URL ;
- Un type ou une classe de dispositif générique GDT ;

Par ailleurs, chaque instance de modèle générique GD peut présenter :
- Un ou plusieurs attributs GA ;
- Une ou plusieurs variables d'états GS .

Un attribut GA est notamment défini par un nom d'attribut GAN et par une valeur GAV. Les attributs GA représentent par exemple des informations additionnelles de type et/ou de configuration obtenues par exemple pendant la phase d'appairage.

Une variable d'état GS est notamment définie par un identifiant ou un nom unique GSID dans la portée du modèle de dispositif générique GDM considéré, et par une valeur GSV. Les instances de modèles de dispositif générique GD présentant des variables d'états GS peuvent autoriser des requêtes sur leur état et/ou envoyer des notifications lorsque la valeur de la variable d'état GSV change.

Une instance de modèle de dispositif générique GD peut posséder au moins une variable d'état GS. Cette variable d'état GS présente un identifiant ou nom d'état GSID explicite prédéfini par le modèle considéré, et une valeur de variable d'état GSV, sélectionnée parmi plusieurs valeurs prédéfinies ou appartenant à une plage de valeur de variables d'état prédéfinie par le modèle considéré .

En outre, une instance de modèle de dispositif générique GD peut être associée à une ou plusieurs commandes génériques GC avec :
- un nom de commande explicite GCID ; et
- Un ou plusieurs paramètres normalisés GCP.

Les commandes supportées sont définies par le modèle de dispositif générique GDM.

Cette description est indépendante du protocole réel ou des détails d'implémentation d'un modèle de dispositif de bas niveau RDM sous-jacent.

A titre d'exemple, un volet roulant peut être modélisé par une instance de modèle de modèle de dispositif générique GD défini de la façon suivante :
- Classe ou Type GDT: « Volet Roulant Positionnable »/ (PositionableRollerShutter) ;
- Variable d'état GS : « Etat de fermeture »/(ClosureState) pouvant prendre des valeurs suivant une échelle normalisée de 0 à 100% ;
- Commande générique GC supportée : « réglage d'ouverture »/(SetClosure) avec un paramètre d'ouverture (amount) pouvant prendre des valeurs suivant une échelle normalisée de 0 à 100%.

Une instance de modèle de dispositif générique GD est implicitement reliée à au moins une instance de modèle de dispositif de bas niveau RD sous-jacente. En pratique, ce lien peut être modélisé par l'identifiant unique de l'instance de modèle générique GDURL qui correspond à une adresse de dispositif, et qui tient le rôle à la fois d'identifiant unique et de pointeur vers l'instance de modèle de dispositif de bas niveau RD sous-jacente. La réalisation du lien ou de la clé d'indexation sera détaillée ultérieurement.

Il est à noter que dans certains cas, une instance de modèle de dispositif de bas-niveau RD peut correspondre à plusieurs instances de modèles de haut-niveau GD.

Cela est notamment le cas en raison du fait que la couverture fonctionnelle d'un modèle de dispositif de bas niveau peut être différente suivant les protocoles considérés. Ainsi, un modèle de dispositif de bas niveau peut soit couvrir une fonction simple, soit de multiples fonctions d'un système complexe. A titre d'exemple, un système de chauffage peut couvrir fonctionnellement des commandes de marche/arrêt/réglage du chauffage qui correspondent à une première instance d'un modèle de dispositif générique GD de type « système de chauffage ». Ce système peut également comprendre un ou plusieurs capteurs de température, éventuellement localisés à des positions distinctes de l'installation domotique qui peuvent correspondre à des instances d'un autre modèle de dispositif générique GD relatif à un type ou une classe « capteur ».

Le système d'abstraction conçu permet de modéliser plusieurs instances de modèles de dispositif générique GD sur la base du même dispositif réel et de la même instance de modèle de dispositif de bas niveau RD sous-jacent.

Dans un tel cas, les instances de modèles de dispositifs génériques GD relatifs à la même instance de dispositif de bas niveau RD peuvent être appelées sous-systèmes.

Dans le cas où plusieurs dispositifs domotiques D sont groupés, dans leur protocole natif, par exemple dans le cas d'un ensemble de volets d'une façade d'un bâtiment, il est possible de créer une instance de modèle de dispositif de bas niveau virtuel RD, pour représenter le groupe dans un format proche de son protocole natif, puis de lier cette instance de modèle de dispositif de bas niveau virtuel RD à une ou plusieurs instances de modèle de dispositif génériques GD. De cette façon, il est possible de conserver une correspondance entre au moins une instance de modèle de dispositif générique GD et une instance de modèle de dispositif de bas-niveau RD.

La structure de l'identifiant unique d'une l'instance de modèle générique GDURL va être à présent décrite de façon correspondante à un mode de réalisation particulier.

Selon ce mode de réalisation, l'identifiant unique d'une instance de modèle générique GDURL comprend des informations sur :
- Le protocole natif local du dispositif domotique D ;
- Le chemin de communication vers le dispositif D, incluant les unités centrales de commande intermédiaires U et les adresses de terminaison à traverser, organisées ou non dans une topologie hiérarchique ;
- Un identifiant de sous-système subsystemld si le dispositif appartient à un groupe d'instances de modèles de dispositifs génériques GD associés à la même instance de modèle de dispositif de bas niveau RD sous-jacent. Les dispositifs qui sont une expression unique d'une instance de modèle de dispositif de bas niveau GD ne présentent pas d'extension d'identification d'un sous-système.

Ainsi, la forme de l'identifiant unique d'une l'instance de modèle générique GDURL peut être la suivante :
<protocol>://<gatewayld>/<rawDeviceAddress>(#<subsystemld>)

Dans laquelle les champs suivants sont présents :
protocol : identifiant du protocole local de dispositif natif;
gatewayld : identifiant de la première unité centrale de commande U, par exemple un numéro de série ou un identifiant unique.
rawDeviceAddress : un chemin simple ou à plusieurs niveaux. Sa signification et son format dépendent du schéma d'adressage du protocole de communication local du dispositif D.
subsystemld : ce champ optionnel indique une identification, par exemple un rang du sous-système (démarrant par exemple à 1), si un tel sous-système est présent.

### Exemples:

### 1) knx://0201-0001-1234/1.1.3

Cet identifiant unique d'une l'instance de modèle de dispositif générique GDURL correspond à un dispositif D communiquant par le protocole KNX avec une adresse individuelle 1.1.3 accessible par l'unité centrale de commande U portant l'identifiant #0201-0001-1234.

### 2) io://0201-0001-1234/145036#2

Cet identifiant unique d'une l'instance de modèle générique GDURL correspond à un sous-système portant le n°2 associé à un dispositif D communiquant par le protocole io homecontrol avec une adresse radio 145036 accessible par l'unité centrale de commande U portant l'identifiant #0201-0001-1234.

Les manipulations des différentes instances de modèles de dispositif de bas niveau RD et de dispositif génériques GD sont réalisées par un processus ou service d'exécution ES. Afin de stocker les différentes instances de modèles mentionnées ci-dessus, le service d'exécution peut avoir accès à une base de données d'instances IDB. Bien entendu, ces différents types d'instances peuvent être stockées également de façon séparée. Par ailleurs, par base de données, on entend ici un mode de stockage approprié pour un ensemble d'instances, qui peuvent être mémorisées dans une liste, un arbre ou des tables ou tout autre structure de données appropriée.

Un mode de réalisation de la base de données IDB va à présent être décrit. Selon ce mode de réalisation, la base de données IDB peut contenir des tables organisées sous forme de tableaux. Chaque ligne correspond à une instance de modèle dispositif domotique, bas niveau RD ou générique GD, selon la table considérée. Les colonnes correspondent aux différents types d'information stockée.

Ainsi, une table RDTbl des instances de modèle de dispositif de bas niveau RD peut contenir des colonnes comprenant les données suivantes :
I - l'identifiant de l'unité centrale de commande U à laquelle un dispositif domotique est rattaché UID;
II - l'adresse du dispositif domotique dans le réseau local géré par l'unité centrale de commande RDID;
III - le type de protocole local utilisé RDPT;
IV - type de modèle de dispositif bas niveau RDT, correspondant par exemple à une désignation de volet roulant ou encore d'éclairage.

Une clé d'indexation RDK, unique pour chaque dispositif domotique, est utilisée. Cette clé d'indexation unique RDK peut être générée à partir des trois éléments I, II, III énumérés ci-dessus; elle peut être stockée dans chaque table. Une autre possibilité est d'utiliser comme clé d'indexation RDK un identifiant qui s'auto-incrémente au fur et à mesure de l'entrée des données dans la base IDB.

Selon encore une autre possibilité, la clé d'indexation RDK peut être calculée à chaque accès, en partant des éléments I, II, éventuellement III.

De façon générale, dans le cas où la clé d'indexation est calculée, ce calcul peut se baser sur des éléments d'identification. Les éléments d'identification combinés doivent permettre l'identification d'un unique dispositif domotique de bas-niveau RD.

A noter que les différents éléments d'identification, pris individuellement, ne sont pas nécessairement uniques pour chaque dispositif mais la combinaison de deux ou plusieurs éléments d'information doit l'être. L'identifiant UID de l'unité centrale de commande U à laquelle le dispositif domotique D est rattaché ou l'adresse RDID du dispositif domotique, ou éventuellement celle de son parent dans un système d'adressage hiérarchique dans le réseau local géré par l'unité centrale de commande U sont des exemple d'éléments d'identification évoqués ci-dessus.

Ces deux éléments sont suffisants pour une identification sans ambigüité du dispositif domotique. D'autres éléments d'identification peuvent être utilisés, par exemple le type de protocole local utilisé par le dispositif. Cet élément supplémentaire d'identification permet la sélection rapide des instances RD, GD concernées, et du pilote de protocole PD à exécuter, étant donné qu'un pilote de protocole PD est spécifique d'un type de protocole natif.

Il est à noter que, dans le cas où la clé d'indexation est calculée à chaque accès, les mêmes informations peuvent être présentes dans des éléments d'identification sous des formats différents.

Un exemple de ligne de table RDTbl est reproduit ci-dessous.

| UID | RDID | RDPT | RDT |
|---|---|---|---|
| 0201-0001-1234 | 120403 | IO | 0x0100202 |

Cette ligne correspond à une table dans laquelle la clé d'indexation RDK est calculée et non stockée, pour un dispositif reliée à une unité centrale de commande portant l'identifiant 0201-0001-1234, le dispositif étant identifié par son adresse radio IO 120403 sur le réseau local IO, le type de protocole local utilisé étant IO homecontrol, le type de modèle de dispositif de bas niveau étant 0x0100202, ce qui correspond selon une implémentation à un volet roulant avec gestion de basse vitesse du fabricant SOMFY.

D'autres informations, comme le nom des variables d'état RSID, les valeurs des variables d'états RSV, des indicateurs binaires (VRAI/FAUX) pour des commandes en cours d'exécution, etc., peuvent être stockées dans des tables différentes ou dans la même table. Si des tables différentes sont utilisées, la clé d'indexation unique RDK pour chaque instance de modèle de dispositif de bas-niveau RD assure la correspondance entres les informations stockées et le dispositif concerné.

Une table GDTbl des instances de modèle de dispositif générique GD peut comprendre des colonnes comportant les données suivantes :
I - l'identifiant unique d'une l'instance de modèle générique GDURL ;
II - la classe ou type de dispositif générique GDT.

Ainsi, un exemple de ligne de table GDTbl, correspondant à l'exemple précédemment illustré de ligne de table RDTbl est reproduite ci-dessous.

| GDURL | GDT |
|---|---|
| io://0201-0001-1234/120403 | RollerShutterWithLowSpeedSupport |

Cette ligne est relative à une instance de modèle de dispositif générique GD correspondant à l'instance de modèle de dispositif de bas-niveau RD représentée dans l'exemple de table RDTbl représentée précédemment.

D'autres informations, comme le nom des variables d'état GSID, les valeurs des variables d'états GSV peuvent être stockées dans des tables différentes ou dans la même table. Il peut être intéressant d'associer d'autres informations aux instances de modèles de dispositifs génériques, comme un nom, une localisation physique du dispositif D dans l'installation. Toutefois, ces informations ne peuvent pas nécessairement être détectées et sont typiquement définies par l'installateur ou l'utilisateur.

Une clé d'indexation unique GDK, représentant un dispositif domotique donné, peut être stockée dans la table.

Comme pour la table des instances de bas niveau, la clé d'indexation peut être calculée à chaque accès. Pour l'accès à la table des instances de modèle générique, il peut être utile de calculer cette clé GDK à partir de l'identifiant GDURL, par exemple en utilisant directement cet identifiant comme clé.

Les instances de modèles bas niveau RD et générique GD sont calculées et/ou stockées avec la même valeur de clé d'indexation GDK ou RDK, en ajoutant éventuellement un identifiant de sous-système dans le cas où plusieurs instances de dispositif génériques GD correspondent à une seule instance de modèle de dispositif de bas-niveau.

Selon un mode de mise en oeuvre, les instances de modèle de dispositif générique GD sont seulement partiellement mémorisées de façon persistante. Ainsi, seules les identifiants GDURL de dispositif et les classes ou types GDT sont persistées. Les attributs GA et les variables d'états GS sont recalculés à partir des données des instances de modèles de bas-niveau comme cela sera décrit ultérieurement.

Les pilotes de protocoles PD identifiés sur la figure 3 vont être à présents décrits. Les pilotes de protocole mettent en oeuvre la logique centrale de la couche d'abstraction, à savoir les règles de conversion diverses entre les deux modèles génériques et de bas niveau. Il peut exister un pilote de protocole PD par type de protocole supporté, même si différents pilotes peuvent partager des fonctionnalités communes, en capitalisant sur les implémentations existantes.

Chaque pilote de protocole PD peut réaliser un ensemble d'opérations de conversions. Afin de réaliser les différentes conversions mentionnées ci-dessous, un pilote de protocole peut être associé à une base de donnée de règles de conversion RDB comprenant les différents types de règles de conversion mentionnées ci-dessous, à savoir : des règles de conversion de modèles MCR ; des règles de conversion d'état SCR ; des règles de conversion de commande CCR. Bien entendu, ces différents types de règles peuvent être stockées également de façon séparées. Par ailleurs, par base de données, on entend ici un mode de stockage approprié pour un ensemble de règles, qui peuvent être mémorisées dans une liste, un arbre ou des tables ou tout autre structure de données appropriée. Il est à noter que les règles de conversions MCR, SCR, CCR sont stockées ou enregistrées de façon indépendante des instances. Ces dispositions permettent de limiter le volume d'informations relatives aux conversions qui ne sont pas dupliquées pour chaque instance de modèle.

En particulier, un pilote de protocole PD peut réaliser une conversion de modèle CvM, c'est à dire la détermination ou la sélection d'une classe ou type de dispositif générique GDT, ou d'une liste de classes ou types GDT, à partir d'une instance de modèle de dispositif de bas niveau RD donnée, sur la base d'au moins une règle de conversion de modèle MCR. Si l'instance de modèle de dispositif de bas niveau RD nécessite d'être représentée par plusieurs instances de modèles de dispositifs génériques GD, le pilote retournera une liste de tels sous-systèmes en tant que conversion de modèle CvM. En particulier, La sélection d'une classe générique de dispositif peut utiliser le type d'une instance de modèle dispositif de bas niveau RDT mais pourrait également utiliser d'autres attributs dans le processus de sélection. Ceci est utile par exemple pour les dispositifs modulaires pour lesquels une fonction optionnelle peut être présente ou non. Par exemple : la présence optionnelle d'un capteur additionnel pour un système de chauffage.

Selon un mode de réalisation, le pilote de protocole PD peut réaliser la détermination du type ou classe de modèle de dispositif générique GDT en consultant une table MTbl de sa base de données RDB. A titre d'exemple, la table MTbl peut comprendre des colonnes comprenant les données suivantes :
- un type de dispositif de bas-niveau RDT
- au moins un type ou classe de dispositif générique correspondant GDT.

Deux exemples de sélection de type GDT sont décrits ci-dessous.

### Exemple 1 :

Nous supposons que l'instance de dispositif de bas-niveau RD découverte ou configurée est définie de la façon décrite dans le tableau ci-dessous.

| RDPT | RDT | RA | RDID |
|---|---|---|---|
| IO | 0x0100202 | - | 120403 |

Cette ligne correspond à un dispositif identifié par son adresse radio IO 120403 sur un réseau local IO géré par une unité centrale de commande définie par identifiant UID non représenté, le type de protocole local utilisé étant IO homecontrol, le type de modèle de dispositif de bas niveau étant 0x0100202, ce qui correspond selon une implémentation à un volet roulant avec gestion de basse vitesse du fabricant SOMFY.

Ces données sont communiquées comme entrée au pilote de protocole PD correspondant au protocole IO. Le pilote de protocole réalise la détermination du type ou classe de modèle de dispositif générique GDT en consultant la table MTbl de sa base de données RDB. La sélection permet d'identifier un exemple de ligne de table MTbl reproduite ci-dessous.

| RDT | GDT |
|---|---|
| 0x0100202 | RollerShutterwithLowSpeedSupport |

Ainsi, le type de dispositif générique identifié est « volet roulant avec gestion de basse vitesse » / (RollerShutterWithLowSpeedSupport). Dans cet exemple, le type de dispositif de bas-niveau RDT est associé à un seul type de dispositif générique qui correspond à la conversion de modèle CvM. Il n'y a pas de sous-système.

### Exemple 2 :

Nous supposons que l'instance de dispositif de bas-niveau RD découverte ou configurée est définie de la façon décrite dans le tableau ci-dessous.

| RDPT | RDT | RA | RDID |
|---|---|---|---|
| MODBUS | 0x00101 | 'sensorAvailable'=true | 4 |

Cette ligne correspond à un dispositif identifié par son adresse bus MODBUS 4 sur le réseau local MODBUS, le type de protocole local utilisé étant MODBUS, le type de modèle de dispositif de bas niveau étant 0x00101, ce qui correspond selon une implémentation à un système de chauffage avec un capteur de température extérieure optionnel.

Ces données sont communiquées comme entrée au pilote de protocole PD correspondant au protocole MODBUS. Le pilote de protocole réalise la détermination du type ou classe de modèle de dispositif générique GDT en consultant la table MTbl de sa base de données RDB. La sélection permet d'identifier un exemple de ligne de table MTbl reproduite ci-dessous.

| RDT | GDT |
|---|---|
| 0x00101 | HeatingSystemController OutsideAirTemperatureSensor (only if attribute 'sensorAvailable'=true) |

Ainsi, les types de dispositif génériques GDT identifiés sont :
- « Contrôleur de système de chauffage » / (HeatingSystemController) ; et
- « Capteur de température extérieure » / (OutsideAirTemperatureSensor).

Dans cet exemple, le type de dispositif de bas-niveau RDT est associé à deux types de dispositif génériques qui correspondent à la conversion de modèle CvM. Ainsi, l'instance de dispositif de modèle de bas-niveau RD sera associée à deux instances de modèle de dispositif générique GD qui forment deux sous-systèmes, à savoir un contrôleur principal et un capteur. Dans cet exemple le capteur est optionnel mais est présent sur le dispositif particulier considéré. Si le capteur n'était pas présent, par exemple parce qu'il n'avait pas été installé, le pilote de protocole n'aurait retourné qu'un seul type correspondant donc à un seul sous-système, à savoir le contrôleur principal.

Un pilote de protocole PD peut par ailleurs procéder à la conversion d'une variable d'état de bas niveau RS en une ou plusieurs variables d'états génériques GS décrits dans la classe de dispositif générique GDT, sur la base d'au moins une règle de conversion d'état SCR. Ainsi, un pilote de protocole peut déterminer les valeurs des variables d'état génériques GS d'un type de modèle de dispositif générique GDT à partir des valeurs de variables d'état de bas niveau RS correspondant à un identifiant RSID donné.

Selon un mode de réalisation, le pilote de protocole PD peut réaliser la détermination d'une conversion d'état CvS d'une variable d'état de bas niveau RS en une ou plusieurs variables d'états génériques GS en consultant une table STbl de sa base de donnée RDB. A titre d'exemple, la table STbl peut comprendre des colonnes comprenant les données suivantes :
- un identifiant ou un nom de variable générique GSID ;
- un type de dispositif générique GDT ;
- un identifiant ou un nom de variable de bas niveau RSID ;
- une règle de conversion d'état SCR entre la valeur d'une variable d'état de bas-niveau RSV et une valeur d'une variable d'état générique GSV.

Deux exemples de conversion de variable d'état de bas-niveau RS sont décrits ci-dessous.

### Exemple 1 :

Nous supposons qu'un message est reçu d'une unité centrale de commande U d'une installation domotique 17 contenant une indication d'une modification concernant la valeur d'une variable d'état S du dispositif définie de la façon décrite dans le tableau ci-dessous.

| RDPT | RDID | RSID | RSV |
|---|---|---|---|
| MODBUS | 1234 | 0x0C213 | 123 |

Ce message correspond à la mise à jour de la variable de d'état RSID 0x0C213 correspondant au mode de régulation d'un dispositif de type système de chauffage à l'adresse RDID 1234 de son réseau local communiquant selon le protocole local RDPT MODBUS, la nouvelle valeur RSV étant 123.

Le pilote de protocole PD du protocole MODBUS peut sur cette base procéder à la conversion, en sélectionnant une règle de conversion d'état SCR ou fonction de conversion en utilisant le type de dispositif de bas-niveau RDT (non représenté) et le nom ou identifiant de la variable d'état de bas niveau RSID.

La sélection permet d'identifier un exemple de ligne de table STbl reproduite ci-dessous.

| GSID | GDT | RSID | SCR |
|---|---|---|---|
| RegulationModeState | HeatingSystem | 0x0C213 | if (v == 123) then return 'auto' else return 'manual' end; |

Ainsi, la nouvelle valeur identifiée 123 pour la variable d'état de bas niveau identifiée par le RSID 0x0C213 correspond à la valeur de conversion d'état CvS « Auto » pour une variable générique GS « RegulationModeState » d'une instance de modèle de dispositif générique « HeatingSystem ».

### Exemple 2 :

Nous supposons qu'un message est reçu d'une unité centrale de commande U d'une installation domotique 17 contenant un une indication d'une modification concernant une variable d'état RS du dispositif de bas-niveau. La mise à jour d'une variable d'état RS est décrite dans le tableau ci-dessous.

| RDPT | RDID | RSID | RSV |
|---|---|---|---|
| IO | 101 | 0x14 | 1024000 |

Ce message correspond à la mise à jour de la variable de d'état RSID 0x014 correspondant à la température mesurée par un capteur d'un système de chauffage à l'adresse RDID 101 de son réseau local communiquant selon le protocole local RDPT IO homecontrol, la nouvelle valeur RSV étant 1024000.

Le pilote de protocole PD de protocole IO peut sur cette base procéder à la conversion, en sélectionnant une règle de conversion d'état SCR ou fonction de conversion en utilisant le type de dispositif de bas-niveau RDT (non représenté) et le nom ou identifiant de la variable d'état de bas niveau RSID.

La sélection permet d'identifier un exemple de ligne de table STbl reproduite ci-dessous.

| GSID | GDT | RSID | SCR |
|---|---|---|---|
| TemperatureState | TemperatureSensor | 0x14 | return v/51200; |

Ainsi, la nouvelle valeur identifiée 1024000 pour la variable d'état identifiée par le RSID 0x014 correspond à une valeur de conversion d'état CvS de 21 (°C) pour une variable générique GS de Température / (« TemperatureState ») d'une instance de modèle de dispositif générique de type « Capteur de température » / ( TemperatureSensor ).

Un pilote de protocole peut en outre procéder à la conversion des commandes génériques GC associées à une instance de modèle de dispositif générique GD en une ou plusieurs commandes de bas-niveau RC spécifiques du protocole à exécuter sur le dispositif réel D, sur la base d'au moins une règle de conversion de commande CCR. Par exemple, la commande décrite ci-dessus setClosure(50%) peut avoir différentes traductions en fonction du protocole du dispositif de bas niveau RD et de son type RDT, et parfois de la configuration particulière de ce dispositif. Cette conversion est implémentée dans le pilote de protocole correspondant au protocole de communication local utilisé par le dispositif domotique.

Ainsi, pour convertir une commande générique GC en une commande de bas-niveau RC ou une combinaison de commandes de bas niveau RC, il convient de procéder à :
- une reconnaissance de l'instance de modèle de dispositif de bas-niveau cible RD, par l'intermédiaire de l'identifiant d'instance de modèle de dispositif générique fournie GDURL; puis
- une détermination de la conversion à réaliser sur la base de l'instance sélectionnée RD en utilisant une règle de conversion de commande CCR ou fonction de conversion.

Dans la plupart des cas, le pilote de protocole utilise seulement le type de dispositif de bas-niveau RDT, mais dans certains cas complexes, la valeur de certains attributs peut être nécessaire pour déterminer complètement la commande de bas niveau à générer. Dans de tels cas, le pilote de protocole peut accéder aux attributs requis en utilisant l'identifiant d'unité centrale de commande UID et l'identifiant de l'instance de dispositif de bas-niveau RDID.

La commande générique GC peut présenter des paramètres, auquel cas ceux seront transmis à règle de conversion CCR. La règle de conversion CCR peut également utiliser des informations contextuelles comme l'utilisation attendue de la commande ou le niveau de priorité de la commande. Les commandes de bas-niveau peuvent ensuite être transmises à l'unité centrale de commande correspondante pour exécution.

Selon un mode de réalisation, le pilote de protocole PD peut réaliser la détermination d'une conversion d'une commande générique GC en une ou plusieurs commandes de bas-niveau RC en consultant une table CTbl de sa base de données RDB. A titre d'exemple, la table CTbl peut comprendre des colonnes comprenant les données suivantes :
- un type de dispositif de bas-niveau RDT;
- un nom ou identifiant de commande générique GCID;
- une règle de conversion de commande CCR ou fonction de conversion.

Deux exemples de conversion de commande générique GC sont décrits ci-dessous.

### Exemple 1 :

Nous supposons que la commande générique GC appelée est définie de la façon décrite dans le tableau ci-dessous.

| GDURL | GC |
|---|---|
| io://1234-5678-0000/120403 | setClosure(60%) |

Cette commande correspond à un ordre à un volet roulant communiquant en IO avec une adresse radio 120403 dans le réseau local géré par l'unité centrale de commande ayant l'identifiant 1234-5678-0000, de se fermer à 60%.

Il convient dans un premier temps de déterminer l'instance de modèle de dispositif de bas niveau correspondante et son type, en utilisant l'adresse comprise dans le GDURL. Nous supposerons que le type de dispositif de bas-niveau RDT est 0x0100202, ce qui correspond à un volet roulant avec gestion de basse vitesse du fabricant SOMFY.

Le pilote de protocole peut ensuite sur cette base procéder à la conversion, en sélectionnant une règle de conversion de commande CCR ou fonction de conversion en utilisant le type de dispositif de bas-niveau RDT et le nom ou identifiant de la commande générique GCID.

La sélection permet d'identifier un exemple de ligne de table CTbl reproduite ci-dessous.

| RDT | GCID | CCR |
|---|---|---|
| 0x0100202 | setClosure (with one parameter p1) | return createActivateFunc(p1*51200) |

La règle de conversion de commande CCR crée une commande de bas-niveau RC de type 'Activate Func', spécifique du protocole IO avec un paramètre principal mis à l'échelle à partir du paramètre générique p1. Ici, la fonction « createActivateFunc()» retourne des données binaires destinées à être utilisée par une unité centrale de commande U pour former le corps (payload) d'une trame radio IO.

### Exemple 2 :

Nous supposons que la commande générique GC appelée est définie de la façon décrite dans le tableau ci-dessous.

| GDURL | GC |
|---|---|
| mod bus://1234-5678-0000/4 | setTargetTemperature(21) |

Cette commande correspond à un ordre à un système de chauffage communiquant en MODBUS avec une adresse bus 4 dans le réseau local géré par l'unité centrale de commande 1234-5678-0000 de régler son thermostat sur une température de consigne de 21°C.

Il convient dans un premier temps de déterminer l'instance de modèle de dispositif de bas niveau correspondante et son type, en utilisant l'adresse comprise dans le GDURL. Nous supposerons que le type de dispositif de bas-niveau RDT est 0x00101, ce qui correspond selon une implémentation à un système de chauffage avec un capteur de température extérieure optionnel.

Le pilote de protocole peut ensuite sur cette base procéder à la conversion, en sélectionnant une règle de conversion de commande CCR ou fonction de conversion en utilisant le type de dispositif de bas-niveau RDT et le nom ou identifiant de la commande générique GCID.

La sélection permet d'identifier un exemple de ligne de table CTbl reproduite ci-dessous.

| RDT | GCID | CCR |
|---|---|---|
| 0x00101 | setTargetTemperature (with one parameter p1) | return { createConfigurationModeCommand(), createSetTargetTemperatureCommand(p1) } |

La règle de conversion de commande CCR crée deux commandes de bas-niveau RC : la première commande met le dispositif en mode configuration et la seconde commande définit la température cible en utilisant la valeur du paramètre générique p1. Ici, les fonctions « createConfigurationModeCommand() » et « createSetTargetTemperatureCommand() » retournent des données binaires spécifiques au protocole MODBUS destinées à être transmise sur le bus du dispositif par une unité centrale de commande U pour changer la configuration du système de chauffage.

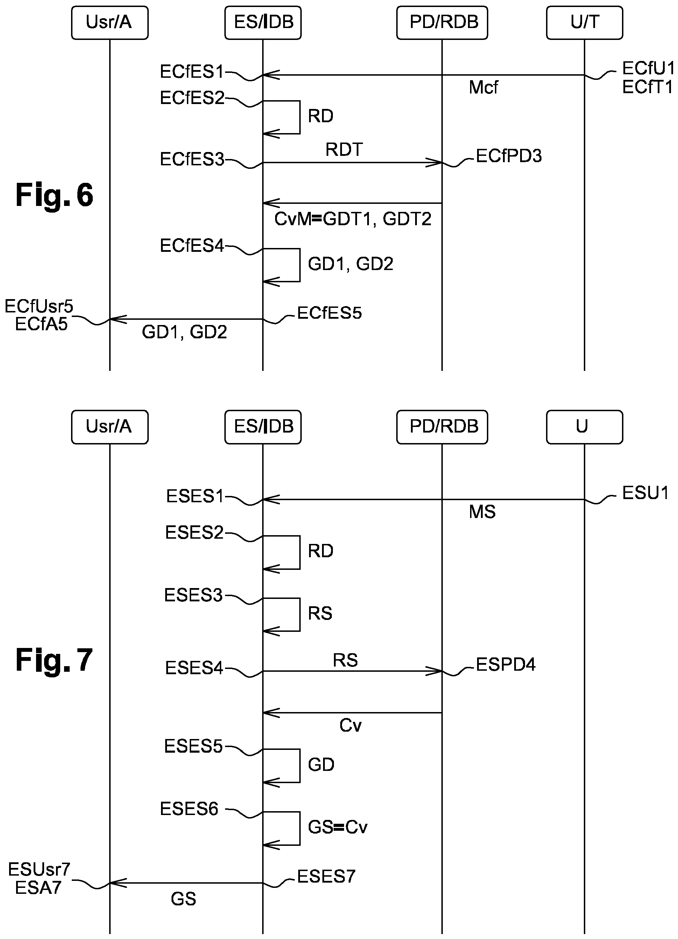

Les figures 6 à 8 représentent des modes de mise en oeuvre de procédés de configuration, de supervision et de commande sur la base du système décrit ci-dessus.

Un procédé de configuration d'une d'au moins une installation domotique 17 d'un bâtiment 1 exécuté par un serveur Sv connecté à l'au moins une installation domotique 17 va être à présent décrit en référence à la figure 6.

Dans un premier temps, le procédé comprend une étape de réception ECfES1 d'un message de configuration MCf émis à partir d'une unité centrale de commande U d'une installation domotique 17, dans une étape ECfU1. Le message de configuration MCf contient une indication d'une mise en service d'un nouveau dispositif domotique D ou d'une mise à jour/reconfiguration d'un dispositif préalablement installé.

Selon une alternative, il est possible que le message MCf soit émis par un terminal T d'un utilisateur dans une étape ECfT1. A titre d'exemple, dans le cas de protocoles monodirectionnels, l'utilisateur peut effectuer la mise en service, la configuration ou la reconfiguration/mise à jour du dispositif D sur le lieu de l'installation domotique et envoyer ensuite les informations avec son terminal T pour initier le procédé de configuration. Le procédé comprend ensuite une étape de création ECfES2 de l'au moins une instance de modèle de dispositif de bas-niveau RD représentant le dispositif domotique D. L'instance de modèle de dispositif de bas-niveau RD est stockée dans la base de données IDB accessible au service d'exécution ES. En particulier une ligne de la table RDTbl peut être créée comme cela a été décrit précédemment sur la base des informations contenues ou déduites de la réception du message MCf. En effet, le contenu du message MCf ou les informations sur son émetteur permettent de déterminer des informations sur :
- l'identifiant de l'unité centrale de commande U à laquelle un dispositif domotique est rattaché UID;
- l'adresse du dispositif domotique dans le réseau local géré par l'unité centrale de commande RDID;
- le type de protocole local utilisé RDPT;
- type de modèle de dispositif bas niveau RDT, correspondant par exemple à une désignation de volet roulant ou encore d'éclairage.

Une étape de détermination ECfS3 d'une classe ou type de dispositif générique GDT, ou d'une liste de classes ou types GDT, à partir d'une instance de modèle de dispositif de bas niveau RD donnée est ensuite réalisée, ce qui correspond à la détermination d'une conversion de modèle CvM. Cette étape est réalisée par le biais d'un appel de fonction du pilote de protocole PD qui reçoit cet appel dans une étape ECfPD3 et qui dispose de la base de données de règles de conversion RDB comprenant des règles de conversion de modèle MCR. Si l'instance de modèle de dispositif de bas niveau RD nécessite d'être représentée par plusieurs instances de modèles de dispositifs génériques GD, le pilote retournera une liste de telles classes ou types de sous-systèmes GDT1, GDT2, comme cela a également été décrit précédemment.

Une étape de création ECfES4 de l'au moins une instance de modèle de dispositif générique GD1, GD2 pour l'au moins une instance de modèle de dispositif de bas-niveau RD est ensuite réalisée sur la base des types ou classes GDT1, GDT2 déterminés à l'étape ECfES3. Les instances de modèles de dispositifs génériques GD1, GD2 sont stockées dans la base IDB, par exemple dans une table GDTbl comme cela a été décrit précédemment. Le lien entre une instance de modèle de dispositif de bas-niveau RD et une ou plusieurs instances de modèles génériques GD1, GD2 peut notamment être réalisé par les identifiants GDURL ou les clés d'indexation GDK et RDK comme cela a été décrit précédemment.

Le procédé peut comprendre une étape ultérieure ECfES5 de notification de l'utilisateur sur la configuration d'un nouveau dispositif D, de façon sollicitée ou non par l'utilisateur, qui reçoit cette notification dans une étape ECfUsrS. Il est également possible de procéder à la notification d'une autre application A exécutée sur le serveur Sv qui reçoit cette notification dans une étape ECfA5.

Le procédé de configuration est réalisé lors de la mise en service, de la configuration ou de la reconfiguration d'un équipement domotique D.

Un procédé de supervision d'au moins une installation domotique 17 d'un bâtiment 1 exécuté par un serveur Sv connecté à l'au moins une installation domotique 17 va être à présent décrit en référence à la figure 7. Nous supposerons que le procédé de supervision est réalisé postérieurement au procédé de configuration précédemment décrit. Ainsi, les instances de modèles de dispositif de bas-niveau RD, et les instances de modèles de dispositif génériques GD sont stockées dans une base de données d'instances IDB accessible au service d'exécution ES, comme nous l'avons précédemment décrit.

Dans un premier temps, le procédé comprend une étape de réception ESES1 d'un message de notification d'état MS émis lors d'une étape ESU1 par une unité centrale de commande U d'une installation domotique 17. Le message de notification d'état MS contient une indication concernant une variable d'état de bas niveau RS d'un dispositif domotique D. Le message MS peut contenir un identifiant de protocole RDPT, une adresse du dispositif dans le protocole RDID, un identifiant de la variable d'état concernée RSID et la nouvelle valeur de la variable d'état RSV.

Le procédé comprend ensuite une étape de détermination ESES2 de l'au moins une instance de modèle de dispositif de bas-niveau RD représentant le dispositif domotique D. Cette détermination peut notamment être réalisée en utilisant le contenu du message de notification d'état MS et/ou en identifiant l'émetteur de ce message, dans cet exemple l'unité centrale de commande U.

En particulier, il convient soit d'utiliser une clé d'indexation RDK déjà présente dans le message, soit, si cette clé n'est pas présente, d'identifier les éléments d'identification permettant de déterminer cette clé RDK qui sera ensuite utilisée pour sélectionner l'instance de dispositif de modèle de bas-niveau RD dans la base de donnée IDB, par exemple dans la table RDTbl décrite précédemment.

Les éléments d'identification sont soit contenus explicitement dans le message de notification MS en provenance de l'unité centrale de commande U, si ce message comporte des champs dédiés pour l'identification des entités source et destination du message ; soit déduits lors de la réception du message de notification MS. A titre d'exemple, une unité centrale de commande peut être identifiée par : son adresse IP, par le n° de port TCP ou la combinaison de ces deux éléments (adresse IP, port TCP, c'est-à-dire l'identifiant d'un socket pour une connexion Internet) ; ou encore par l'identifiant logique d'un canal de communication établi entre l'unité centrale de commande U et le serveur Sv. Une fois l'instance de dispositif de modèle de bas niveau RD identifiée, Une étape de mise à jour ESES3 de la variable d'état de bas niveau RS dans la base de données IDB est réalisée.

Une étape de conversion ESES4 d'une variable d'état de bas niveau RS en une ou plusieurs variables d'états génériques GS décrits dans une ou plusieurs classes de dispositif générique GDT est ensuite réalisée. Cette étape est effectuée en particulier par un appel au pilote de protocole PD qui possède une base de règles de conversion RDB comprenant notamment des règles de conversion d'état SCR qui permettent de convertir une variable d'état de bas niveau RS d'un type de dispositif de bas niveau RDT en une ou plusieurs variables génériques GS1, GS2, GS3 d'une ou plusieurs instances de modèles de dispositifs génériques GD, comme cela a été décrit précédemment, en utilisant par exemple la table STbl. Le pilote de protocole effectue à cet effet une étape de sélection de règle de conversion d'états SCR dans la base de règles de conversion RDB dans une étape ESPD4, puis retourne soit le résultat de la conversion CvS d'une variable d'état RS en une ou plusieurs variables d'état génériques GS, soit une règle à exécuter par le service d'exécution pour obtenir une conversion CvS correspondant à une ou plusieurs variables d'état génériques GS.

Une étape de détermination ESES5 de l'au moins une instance de modèle de dispositif générique GD pour laquelle l'au moins une variable d'état GS doit être mise à jour est ensuite réalisée. Cette détermination peut se baser sur le ou les types de dispositif générique RDT associées à l'au moins une variable d'état générique GS à mettre à jour et sur l'instance de modèle de dispositif de bas-niveau RD déterminée lors de l'étape ESES2.

Une fois que la clé d'indexation RDK a été déterminée pour l'instance de modèle de dispositif de bas-niveau RD, la clé d'indexation GDK, qui correspond à l'identifiant est aisée à déterminer. Dans le cas où plusieurs sous-systèmes GD correspondent à une même instance de modèle de dispositif de bas-niveau, l'information concernant le type de dispositif générique retournée par le pilote de protocole PD permet de définir le sous-système GD devant être mis à jour.

Le procédé comprend ensuite une étape ESES6 de mise à jour d'une ou plusieurs variables d'états génériques GS sur la base de la conversion CvS déterminée pour l'instance de modèle de dispositif générique déterminé GD dans la base de donnéesIDB.

Le procédé peut comprendre une étape ultérieure ESES7 de restitution des valeurs de variables d'états génériques GS mises à jour à destination d'un utilisateur Usr, de façon sollicitée ou non par l'utilisateur, qui reçoit ces valeurs dans une étape ESUsr7. Il est également possible de procéder à la notification d'une autre application A exécutée sur le serveur Sv qui reçoit cette notification dans une étape ESA7.

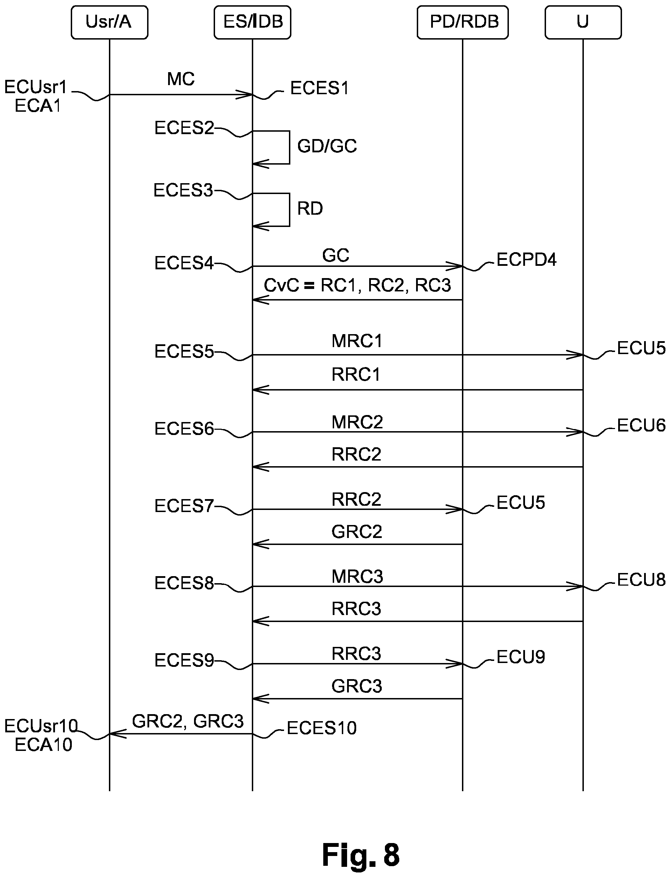

Un procédé de commande d'au moins une installation domotique 17 d'un bâtiment 1 exécuté par un serveur Sv connecté à l'au moins une installation domotique 17 va être à présent décrit en référence à la figure 8. Ce procédé peut être exécuté par exemple par un processus ou service d'exécution ES utilisant les fonctions d'un ou de plusieurs pilotes d'exécution PD tels que décrits ci-dessus.

Dans un premier temps, le procédé comprend une étape de réception ECES1 d'une commande générique GC dans un message MC en provenance
i) d'un terminal T d'un utilisateur Usr ou
ii) d'une application A s'exécutant sur le serveur Sv
émis dans une étape ECUsr1 ou ECA1 respectivement et relative à un dispositif domotique D.

Une étape de détermination ECES2 de l'au moins une instance de modèle de dispositif générique GD représentant le dispositif domotique D est ensuite réalisée, notamment en utilisant l'identifiant unique GDURL du dispositif générique GD qui fait office de clé d'indexation et qui regroupe les éléments d'identification nécessaires correspondant à une instance unique de modèle de dispositif générique GD. Cet identifiant peut être inclus dans le message de commande MC. Une fois l'étape ECES2 réalisée, le procédé comprend une étape de détermination ECES3 de l'au moins une instance de modèle de dispositif de bas-niveau RD correspondant à l'au moins une instance de modèle générique GD déterminé à l'étape précédente. Les instances de modèles de dispositif de bas-niveau RD, et les instances de modèles de dispositif génériques GD sont stockées dans une base de données d'instances IDB accessible au service d'exécution ES. Ainsi, les étapes ECES2 et ECES3 peuvent être réalisées en consultant ladite base IDB.

Une étape de conversion ECES4 d'une ou plusieurs commandes génériques GC de l'au moins une instance de modèle de dispositif générique GD déterminée à l'étape ECES2 en au moins une commande de bas-niveau RC de l'instance de modèle de dispositif de bas niveau RD déterminée à l'étape ECES3 est ensuite réalisée. Cette étape est effectuée en particulier par un appel au pilote de protocole PD qui possède une base de règles de conversion de commande en fonction des types de modèles de dispositif génériques GD et de modèles de dispositif de bas-niveau RD utilisés. Le pilote de protocole effectue à cet effet une étape de sélection de règle de conversion dans la base de règles de conversion RDB dans une étape ECPD4, puis retourne une conversion de commande CvC correspondant à une commande de bas niveau RC à exécuter ou une pluralité de commandes de bas niveau RC1, RC2, RC3 à exécuter. Par la suite, l'exécution de la commande peut être réalisée. La figure 7 correspond à un cas où la conversion d'au moins une commande générique GC applicable à l'au moins une instance du modèle de dispositif générique GD correspond à une pluralité de commande de bas niveau RC1, RC2, RC3, correspondant l'exécution d'une combinaison d'une pluralité de commandes réelles C sur le dispositif domotique D. Dans un tel cas, la correspondance entre les commandes de haut-niveau GC et les commandes de bas niveau RC associées sont gardées en mémoire pour une gestion d'erreur appropriée. En particulier le service d'exécution ES peut mettre en oeuvre un automate à états à cette fin.

Ainsi, dans une étape ECES5, une première commande RC1 est envoyée à destination de l'unité centrale U de l'installation domotique 17 en vue de l'exécution de la commande par le dispositif D, dans un premier message de commande de bas-niveau MRC1. Dans l'exemple représenté, nous supposons que le retour de cette première commande correspond à un succès de la commande avec un code de retour RRC1, envoyé par l'unité centrale de commande U dans une étape ECUS. Le service d'exécution peut stocker cette valeur de succès OK pour la première commande RC1.

Dans une étape ECES6, une deuxième commande RC2 est envoyée à destination de l'unité centrale U de l'installation domotique 17 en vue de l'exécution de la commande par le dispositif D, dans un deuxième message de commande de bas-niveau MRC2. Dans l'exemple représenté, nous supposons que le retour de deuxième commande correspond à un échec de la commande, avec retour d'un code de retour RRC2 présentant par exemple une valeur numérique -2 correspondant à une erreur, envoyé par l'unité centrale de commande U dans une étape ECU6.

Par la suite, le service d'exécution demande, dans une étape ECES7, une conversion du code de retour RRC2 en un code de retour générique GRC2 auprès du pilote de protocole PD qui procède à cette conversion dans une étape ECPD7. A titre d'exemple, le code d'erreur numérique -2 peut être traduit en un code de retour générique GRC2 correspondant à une erreur de type « commande non autorisée ». Le code GRC2 est stocké par le service d'exécution ES.

Dans une étape ECES8, une troisième commande RC3 est envoyée à destination de l'unité centrale U de l'installation domotique 17 en vue de l'exécution de la commande par le dispositif domotique D, dans un troisième message de commande de bas-niveau MRC3. Dans l'exemple représenté, nous supposons que le retour de troisième commande correspond à un échec de la commande, avec retour d'un code RRC3 présentant par exemple une valeur numérique -7, envoyé par l'unité centrale de commande U dans une étape ECU8.

Par la suite, le service d'exécution demande, dans une étape ECES9, une conversion du code de retour RRC3 en un code de retour générique GRC3 auprès du pilote de protocole PD qui procède à cette conversion dans une étape ECPD9. A titre d'exemple, le code d'erreur numérique -2 peut être traduit en un code d'erreur générique GRC3 « pas de réponse radio ». Le code GRC3 est stocké par le service d'exécution ES.

Dans une dernière étape ECES10, le service d'exécution définit une réponse à retourner à l'utilisateur suite au message de commande MC, qui la reçoit dans une étape ECUsr10.

Etant donné qu'un résultat de commande ou code de retour GERC1, a été reçue pour chaque commande de bas niveau RC1, RC2, RC3 exécutée, les résultats doivent être agrégés pour simuler un résultat de commande globale sur la commande générique originale. En particulier, la commande générique est considérée comme effectuée si toutes les commandes de bas niveau ont été réalisées avec succès, et non-effectuée si une ou plusieurs commande de bas niveau ont échoué.

Dans le cas illustré à la figure 7, il peut être considéré que la commande GC a échoué, et que le code de retour donné au client doit être : « commande non autorisée » et « pas de réponse radio ».

Cette réponse est communiquée à l'utilisateur Usr ou à l'application A qui la reçoit dans une étape ECUsr10.

Il est à noter que le procédé de commande peut permettre le pilotage en parallèle de plusieurs produits utilisant le même protocole ou des protocoles de communication locale différents.

En particulier, il est possible dans ce cas d'appliquer les étapes suivantes :
- les commandes de bas-niveau RC applicables à un dispositif domotique D ne présentant pas de sous-ensembles fonctionnels sont exécutées séquentiellement comme décrit précédemment, c'est-à-dire qu'une nouvelle commande est envoyée seulement après la réception du code de retour correspondant à l'exécution de la commande précédente
- les commandes relatives à des dispositifs domotiques D comprenant des sous-ensembles fonctionnels ou à un groupe de dispositifs domotiques peuvent être réalisées parallèlement, c'est-à-dire que les différentes commandes sont envoyées l'une après l'autre, mais sans attendre la réception du code de retour correspondant à l'exécution des commandes précédemment envoyées, pour autant que ces commandes ne concernent pas le même sous-ensemble fonctionnel ou même dispositif dans le cadre d'un groupe, ce qui revient à un fonctionnement correspondant à des files d'attente de commande par dispositif ou par sous-ensemble fonctionnel du dispositif domotique D.

Ces dispositions permettent de paralléliser le traitement des commandes sur des dispositifs distincts ou sur des sous-ensembles fonctionnels d'un même dispositif domotique, de façon à diminuer le temps de traitement de commandes génériques destinées à plusieurs dispositifs domotique distincts ou à des sous-ensembles fonctionnels d'un même dispositif domotique.

Ces dispositions sont particulièrement adaptées pour le suivi de commande longue. A titre d'exemple, considérons un ensemble de dispositifs domotiques formé par un ensemble de 10 volets roulants communiquant selon un protocole bidirectionnel, par exemple du type IO homecontrol communiquant une information d'atteinte de la position souhaitée en retour, chaque volet pouvant parcourir la course souhaitée en 30 secondes. Un traitement séquentiel occasionnera une réalisation de la commande en 5 minutes, alors qu'un traitement en parallèle permettra une réalisation de la commande et un retour au bout de 30 secondes.

## Revendications

1. Procédé de configuration d'au moins une installation domotique (17) d'un bâtiment (1), l'installation domotique (17) comprenant une pluralité de dispositifs domotiques (D), le procédé étant exécuté par une unité de gestion (Sv) connectée à l'au moins une installation domotique (17) et comprenant les étapes suivantes :
i. réception (ECfES1) d'une message de configuration (MCf) émis à partir d'une unité centrale de commande (U) d'une installation domotique (17) ou d'un terminal utilisateur (T), le message (Mcf) contenant une indication d'une mise en service , d'une configuration ou d'une reconfiguration d'un dispositif domotique (D) ;
ii. détermination d'au moins une classe ou type de modèle de dispositif de bas-niveau (RDT) correspondant au dispositif domotique (D) ; **caractérisé en ce que**, chaque dispositif domotique (D) étant représenté par au moins une instance de modèle de dispositif générique (GD) et au moins une instance de modèle de dispositif de bas niveau (RD), et **en ce que** le procédé comprend les étapes suivantes :
iii. création (ECfES2) d'au moins une instance de modèle de dispositif de bas-niveau (RD) en fonction de la classe ou type de dispositif de bas-niveau (RDT) définie à l'étape ii et correspondant au dispositif domotique (D) ;
iv. détermination (ECfS3) d'une conversion de modèle (CvM) convertissant un type ou classe de dispositif de bas niveau (RDT) en au moins une classe ou type de modèle de dispositif générique (GDT) sur la base d'une règle de conversion de modèle (MCR) sélectionnée en fonction de l'instance de modèle de dispositif bas-niveau (RD) déterminée à l'étape iii ou de son type (RDT) ;
v. création (ECfES4) d'au moins une instance de modèle de dispositif générique (GD) pour l'au moins une instance de modèle de dispositif de bas-niveau (RD) sur la base de l'au moins un type ou classe (GDT) correspondant à la conversion de modèle (CvM) déterminé à l'étape iv ;
vi. enregistrement de l'au moins une instance de modèle de dispositif générique (GD) de façon associée avec l'au moins une instance de modèle de dispositif de bas-niveau (RD) ;
le modèle de dispositif générique définissant :
- un ensemble de commandes ou de fonctions associées audit modèle et/ou
- un ensemble d'états ou de variables d'états associés audit modèle et/ou
- un ensemble d'attributs associés audit modèle

2. Procédé selon la revendication 1, comprenant en outre les étapes suivantes :
- Emission d'un message de communication de la configuration d'au moins un dispositif domotique (D) à destination d'un terminal utilisateur (T) ou d'une application (A) exécutée sur l'unité de gestion (Sv) ou sur une autre unité de gestion connectée.

3. Procédé selon la revendication 2, dans lequel un système de notification et d'abonnement au message de communication est mis en place.

4. Procédé selon la revendication 1, dans lequel les règles de conversion de modèle sont stockées sous forme d'une association entre :
- un type de dispositif de bas-niveau ;
- au moins un type ou classe de dispositif générique correspondant GDT.

5. Procédé selon l'une quelconque des revendication 1 à 4, dans lequel chaque instance de modèle de dispositif générique comprend un identifiant unique de dispositif générique.

6. Procédé selon l'une quelconque des revendication 1 à 5, dans lequel les noms des états ou des variables d'états attachés à un modèle de dispositif générique sont explicites.

7. Procédé selon l'une quelconque des revendication 1 à 6, dans lequel les valeurs de variables d'états attachés à un modèle de dispositif générique sont normalisées.

8. Procédé selon l'une quelconque des revendication 1 à 7, dans lequel les noms des commandes attachés à un modèle de dispositif générique sont explicites.

9. Procédé selon l'une quelconque des revendication 1 à 8, dans lequel les paramètres de commandes attachés à un modèle de dispositif générique sont normalisés.

10. Procédé selon l'une quelconque des revendication 1 à 9, dans lequel l'identifiant unique de l'instance de modèle générique peut être constitué en particulier par un identifiant utilisant notamment une notation d'adresse indépendante du protocole, par exemple selon un format de type URL.

11. Procédé selon l'une quelconque des revendication 1 à 10, dans lequel chaque instance de modèle de dispositif de bas-niveau comprend en outre un identifiant de dispositif de bas-niveau unique dans le réseau local associé à une unité centrale de commande d'une installation domotique.

## Patentansprüche

1. Verfahren zur Konfiguration mindestens einer Heimautomatisierungsanlage (17) für ein Gebäude (1), wobei die Heimautomatisierungsanlage (17) eine Vielzahl von Heimautomatisierungsvorrichtungen (D) umfasst, wobei das Verfahren von einer Verwaltungseinheit (Sv) ausgeführt wird, die mit der mindestens einen Heimautomatisierungsanlage (17) verbunden ist, und die folgenden Schritte umfasst:
i. Empfangen (ECfES1) einer Konfigurationsnachricht (MCf), die von einer zentralen Steuereinheit (U) einer Heimautomatisierungsanlage (17) oder einem Benutzerendgerät (T) gesendet wird, wobei die Nachricht (Mcf) eine Angabe einer Inbetriebnahme, einer Konfiguration oder einer Neukonfiguration einer Heimautomatisierungsvorrichtung (D) enthält;
ii. Bestimmen mindestens einer Klasse oder eines Typs eines Low-Level-Vorrichtungsmodells (RDT), das der Heimautomatisierungsvorrichtung (D) entspricht; **dadurch gekennzeichnet, dass** jede Heimautomatisierungsvorrichtung (D) durch mindestens eine Instanz eines generischen Vorrichtungsmodells (GD) und mindestens eine Instanz eines Low-Level-Vorrichtungsmodells (RD) dargestellt wird, und dadurch, dass das Verfahren die folgenden Schritte umfasst:
iii. Erzeugen (ECfES2) mindestens einer Instanz eines Low-Level-Vorrichtungsmodells (RD) in Abhängigkeit von der Klasse oder dem Typ einer Low-Level-Vorrichtung (RDT), der bzw. die in Schritt ii definiert wurde und der Heimautomatisierungsvorrichtung (D) entspricht;
iv. Bestimmen (ECfS3) einer Modellkonvertierung (CvM), die einen Typ oder eine Klasse einer Low-Level-Vorrichtung (RDT) in mindestens eine Klasse oder einen Typ eines generischen Vorrichtungsmodells (GDT) konvertiert, auf Basis einer Modellkonvertierungsregel (MCR), die in Abhängigkeit von der Instanz des Low-Level-Vorrichtungsmodells (RD), die in Schritt iii bestimmt wurde, oder ihres Typs (RDT) ausgewählt wird;
v. Erzeugen (ECfES4) mindestens einer Instanz eines generischen Vorrichtungsmodells (GD) für die mindestens eine Instanz eines Low-Level-Vorrichtungsmodells (RD) auf Basis des mindestens einen Typs oder der Klasse (GDT), der bzw. die der in Schritt iv bestimmten Modellkonvertierung (CvM) entspricht;
vi. Registrieren der mindestens einen Instanz des generischen Vorrichtungsmodells (GD) auf eine mit der mindestens einen Instanz des Low-Level-Vorrichtungsmodells (RD) verknüpfte Weise;
wobei das generische Vorrichtungsmodell definiert:
- einen Satz von Befehlen oder Funktionen, die mit dem Modell verknüpft sind, und/oder
- einen Satz von Zuständen oder Zustandsvariablen, die mit dem Modell verknüpft sind, und/oder
- einen Satz von Attributen, die mit dem Modell verknüpft sind.

2. Verfahren nach Anspruch 1, das weiter die folgenden Schritte umfasst:
- Senden einer Kommunikationsnachricht der Konfiguration mindestens einer Heimautomatisierungsvorrichtung (D) an ein Benutzerendgerät (T) oder eine Anwendung (A), die auf der Verwaltungseinheit (Sv) oder auf einer anderen verbundenen Verwaltungseinheit ausgeführt wird.

3. Verfahren nach Anspruch 2, wobei ein Benachrichtigungs- und Abonnementsystem für die Kommunikationsnachricht implementiert wird.

4. Verfahren nach Anspruch 1, wobei die Modellkonvertierungsregeln in Form einer Verknüpfung gespeichert werden zwischen:
- einem Typ einer Low-Level-Vorrichtung;
- mindestens einem Typ oder einer Klasse einer entsprechenden generischen Vorrichtung GDT.

5. Verfahren nach einem der Ansprüche 1 bis 4, wobei jede Instanz eines generischen Vorrichtungsmodells eine eindeutige Kennung der generischen Vorrichtung umfasst.

6. Verfahren nach einem der Ansprüche 1 bis 5, wobei die Namen der Zustände oder der Zustandsvariablen, die an ein generisches Vorrichtungsmodell angehängt sind, explizit sind.

7. Verfahren nach einem der Ansprüche 1 bis 6, wobei die Werte von Zustandsvariablen, die an ein generisches Vorrichtungsmodell angehängt sind, normalisiert sind.

8. Verfahren nach einem der Ansprüche 1 bis 7, wobei die Namen der Befehle, die an ein generisches Vorrichtungsmodell angehängt sind, explizit sind.

9. Verfahren nach einem der Ansprüche 1 bis 8, wobei die Parameter von Befehlen, die an ein generisches Vorrichtungsmodell angehängt sind, normalisiert sind.

10. Verfahren nach einem der Ansprüche 1 bis 9, wobei die eindeutige Kennung der Instanz eines generischen Modells insbesondere von einer Kennung gebildet werden kann, die insbesondere eine vom Protokoll unabhängige Adressnotation verwendet, zum Beispiel gemäß einem Format vom Typ URL.

11. Verfahren nach einem der Ansprüche 1 bis 10, wobei jede Instanz eines Low-Level-Vorrichtungsmodells weiter eine eindeutige Kennung der Low-Level-Vorrichtung in dem lokalen Netzwerk umfasst, das mit einer zentralen Steuereinheit einer Heimautomatisierungsanlage verknüpft ist.

## Claims

1. A method for configuring at least one home automation installation (17) of a building (1), the home automation installation (17) comprising a plurality of home automation devices (D), the method being executed by a management unit (Sv) connected to the at least one home automation installation (17) and comprising the following steps:
i. Reception (ECfES1) of a configuration message (MCf) emitted from a central control unit (U) of a home automation installation (17) or a user terminal (T), the message (Mcf) containing an indication on a commissioning, a configuration or a reconfiguration of a home automation device (D);
ii. Determination of at least one low-level device model class or type (RDT) corresponding to the home automation device (D), each home automation device (D) being represented by at least one generic device model instance (GD) and at least one low-level device model instance (RD);
iii. Creation (ECfES2) of at least one low-level device model instance (RD) according to the low-level device class or type (RDT) defined at step ii and corresponding to the home automation device (D);
iv. Determination (ECfS3) of a model conversion (CvM) converting a low-level device type or class (RDT) into at least one generic device model class or type (GDT) on the basis of a model conversion rule (MCR) selected according to the low-level device model instance (RD) determined at step iii or its type (RDT);
v. Creation (ECfES4) of at least one generic device model instance (GD) for the at least one low-level device model instance (RD) on the basis of the at least one type or class (GDT) corresponding to the model conversion (CvM) determined at step iv;
vi. Saving of the at least one generic device model instance (GD) in an associated manner with the at least one low-level device model instance (RD);
Wherein the generic device model defines:
- A set of commands or functions associated to said model and/or
- A set of statuses or status variables associated to said model and/or
- A set of attributes associated to said model.

2. The method according to claim 1, further comprising the following steps:
- Emission of a message for communicating the configuration of at least one home automation device (D) toward a user terminal (T) or an application (A) executed on the management unit (Sv) or on another connected management unit.

3. The method according to claim 2, wherein a notification and subscription system may be set up.

4. The method according to claim 1, wherein the model conversion rules are stored in the form of an association between:
- A low-level device type;
- At least one corresponding generic device type or class GDT.

5. The method according to any one of claims 1 to 4, wherein each generic device model instance comprises a generic device unique identifier.

6. The method according to any one of claims 1 to 5, wherein the names of the statuses or status variables relating to a generic device model are explicit.

7. The method according to any one of claims 1 to 6, wherein the status variables values relating to a generic device model are standardized.

8. The method according to any one of claims 1 to 7, wherein the names of the commands relating to a generic device model are explicit.

9. The method according to any one of claims 1 to 8, wherein the command parameters relating to a generic device model are standardized.

10. The method according to any one of claims 1 to 9, wherein the unique identifier of the generic model instance may be constituted in particular by an identifier using in particular an address notation independent of the protocol, for example according to a URL-type format.

11. The method according to any one of claims 1 to 10, wherein each low-level device model instance further comprises a unique low-level device identifier in the local area network associated to a central control unit of a home automation installation.
